# EUROPEAN PATENT APPLICATION

(11) **EP 4 773 053 A2**
(43) Date of publication of application: **08.07.2026**
(21) Application number: 25216167.4
(22) Date of filing: 17.11.2025
(51) Int. Cl.: G06Q 10/063, G06Q 30/0201, G06Q 30/0202, G06Q 30/0601

(54) **SYSTEMS AND METHODS FOR INTEGRATING REAL-TIME BUSINESS INSIGHTS**

(30) Priority: 15.11.2024 US 202418949952
(71) Applicant: Ingram Micro Inc., Irvine, CA 92612 (US)
(72) Inventor: SAHOO, Sanjib, Naperville, IL, 60564 (US)
(74) Representative: Patrade A/S

(57) **Abstract**

Computerized systems and methods are described for integrating real-time insights across various entities involved in distribution processes. The system includes a Real-Time Data Mesh module for ingesting and harmonizing data from multiple sources, a Data Lake for storing harmonized data, and an Advanced Analytics and Machine Learning (AAML) module for generating insights using predictive analytics, anomaly detection, and recommendation engines. A Single Pane of Glass User Interface (SPoG UI) provides visualizations of these insights through interactive dashboards. The system supports customer, vendor, reseller, and associate systems, enabling efficient data exchange and synchronization. It employs natural language processing (NLP) for sentiment analysis, topic modeling for key theme identification, and clustering algorithms for customer segmentation. Continuous learning mechanisms ensure the system adapts to new data in real-time, enhancing decision-making and operational efficiency.

## Description

### CROSS REFERENCE TO RELATED APPLICATIONS

This application is a Continuation-In-Part (CIP) of U.S. Patent Application No. 18/341,714, filed on June 26, 2023 and U.S. Patent Application No. 18/349,836, filed on July 10, 2023. Each of these applications is incorporated herein by reference in its entirety.

### BACKGROUND

In conventional distribution platforms, businesses face significant challenges in obtaining real-time, actionable insights from their data. Traditional systems often operate in silos, with limited integration and connectivity between various customer systems, vendor systems, reseller systems, and other entities involved in the distribution process. This fragmentation results in disjointed data flows, inefficient communication, and an inability to make timely, data-driven decisions.

A major problem with conventional distribution platforms is their reliance on batch processing and periodic data updates. These methods lead to outdated information and delayed responses, hindering businesses' ability to respond promptly to changing market conditions, customer demands, and supply chain disruptions. The lack of real-time data integration prevents businesses from having a unified view of their operations, leading to suboptimal inventory management, missed sales opportunities, and inadequate customer engagement.

Additionally, traditional systems struggle with data harmonization and consistency. Data from different sources is often in varied formats, making it difficult to aggregate and analyze effectively. This inconsistency can result in inaccurate reporting and unreliable business insights, further complicating decision-making processes.

Moreover, conventional platforms lack advanced analytics and machine learning capabilities necessary for deriving meaningful insights from large datasets. Businesses are often unable to leverage predictive analytics, anomaly detection, and personalized recommendations due to the limitations of their existing systems. This deficiency impedes their ability to optimize operations, forecast demand, and enhance customer experiences.

There is an existing challenge in conventional distribution platforms that smaller customers, such as resellers and regional vendors, often lack the necessary infrastructure and resources to generate and leverage real-time business insights. Many small- to medium-sized enterprises (SMEs) do not have the financial capacity or technical expertise to invest in advanced data analytics, artificial intelligence (AI), or machine learning (ML) technologies. This creates a substantial gap in their ability to make data-driven decisions, optimize their operations, and compete with larger, more technologically equipped entities. The absence of real-time insights makes it difficult for these smaller customers to react promptly to market changes, manage inventory effectively, or predict customer demands.

In many cases, smaller customers rely on outdated, fragmented systems that provide delayed or incomplete data. This results in missed opportunities for growth, inefficient inventory management, and an inability to forecast demand accurately. Moreover, without access to real-time insights, these customers often struggle to engage effectively with their supply chains, further hindering their operational efficiency.

The lack of integrated insights is not just an operational issue, it presents a critical growth challenge. Without the ability to harness real-time data, smaller entities are unable to identify trends, optimize pricing, or offer competitive customer experiences. This presents a significant problem in the technology distribution industry, where real-time insights are essential for responding to rapid changes in demand, supply chain disruptions, and shifting consumer preferences. Therefore, there is a critical need for a platform that integrates AI-driven insights directly into their operational processes, enabling smaller customers to make informed, real-time decisions without requiring substantial investments in infrastructure.

Other challenges include the inadequate support for real-time collaboration among stakeholders. Lacking efficient data flow and integration, vendors, resellers, and customers cannot efficiently collaborate, leading to fragmented operations and reduced overall efficiency. The absence of a connected ecosystem limits the ability of businesses to synchronize their efforts and respond cohesively to market dynamics.

Furthermore, conventional distribution platforms often do not incorporate robust security and data protection measures. The lack of standardized protocols and secure data transfer mechanisms increases the risk of data breaches and unauthorized access, compromising the integrity and confidentiality of sensitive business information.

These deficiencies highlight the need for a more integrated, real-time, and data-driven approach to managing distribution processes. A solution that addresses these challenges can significantly improve business operations, enabling stakeholders to access accurate and timely insights, optimize their decision-making, and enhance overall efficiency and customer satisfaction.

### BRIEF SUMMARY OF THE INVENTION

The present disclosure relates to a system and method for integrating real-time business insights across various entities involved in the distribution process, including customer systems, vendor systems, reseller systems, and other associated entities. The disclosed system uses Artificial Intelligence (AI) and Machine Learning (ML) technologies to ingest, harmonize, and analyze data from multiple sources, providing comprehensive, actionable insights in real time.

The system includes a Single Pane of Glass User Interface (SPoG UI) that serves as the primary interface for users, offering a unified view of data and insights from various modules within the system. The Real-Time Data Mesh (RTDM) facilitates continuous data flow and harmonization, ensuring data consistency and accuracy across the platform. The Advanced Analytics and Machine Learning (AAML) module employs predictive analytics, anomaly detection, and recommendation engines to generate insights and provide actionable recommendations.

By integrating data from customer systems, vendor systems, reseller systems, and other entities, the system enables real-time visibility and decision-making capabilities. Users can access current inventory levels, sales forecasts, customer feedback, and other relevant data through interactive dashboards and reports. The system supports collaboration among stakeholders, enhancing operational efficiency and responsiveness to market dynamics.

Additionally, the system incorporates robust security measures, including authentication and authorization mechanisms, to ensure secure data access and protection. Continuous learning mechanisms allow the system to adapt to new data and evolving business needs, maintaining the relevance and accuracy of the insights provided.

In some embodiments, a system described herein is configured to provide real-time insights by integrating data from various sources such as ERP systems, CRM systems, online transactions, clickstream data, and third-party APIs. The system employs a Real-Time Data Mesh module to ingest and harmonize this data, ensuring consistency and accuracy. The harmonized data is stored in a Data Lake, facilitating efficient and scalable data management. The Advanced Analytics and Machine Learning (AAML) module utilizes predictive analytics, anomaly detection, and recommendation engines to generate actionable insights. These insights are then visualized through a Single Pane of Glass User Interface (SPoG UI), which displays interactive dashboards and reports. The system supports integration with customer, vendor, reseller, and associate systems, enabling data exchange and synchronization, and enhancing overall decision-making and operational efficiency.

In some embodiments, a computer-implemented method involves several key operations to achieve real-time data integration and analysis. Initially, data is ingested from various sources and harmonized using ETL processes to ensure data quality. This harmonized data is then stored in a scalable Data Lake. The method uses machine learning models within the AAML module to analyze the data and generate insights, which include predictive analytics for forecasting trends, anomaly detection for identifying irregular patterns, and recommendations for optimized decision-making. The method also includes analyzing customer feedback using natural language processing techniques to determine sentiment and identify key themes. Customer segmentation is performed using clustering algorithms, and personalized marketing messages are generated based on these segments. Continuous learning mechanisms ensure that the models are updated in real-time with new data, maintaining the relevance and accuracy of the insights provided.

In some embodiments, a non-transitory tangible computer-readable medium encompasses instructions that, when executed, enable a computing device to perform the operations required for real-time data integration and analysis. These operations include ingesting data from various sources, harmonizing the data using ETL processes, and storing it in a Data Lake. The medium also includes instructions for the AAML module to generate insights through predictive analytics, anomaly detection, and recommendation engines. Additionally, the medium enables the analysis of customer feedback using natural language processing, identification of key themes through topic modeling, and customer segmentation using clustering algorithms. Personalized marketing messages are generated based on the segmented data. The instructions ensure continuous learning by updating the machine learning models in real-time with new data, thereby enhancing the system's ability to provide accurate and timely insights.

The systems and methods disclosed herein are beneficial for smaller customers, such as small- to medium-sized resellers and vendors, who lack the infrastructure or resources to generate actionable business insights. The system integrates AI and ML technologies to automatically ingest, harmonize, and analyze data from multiple sources, thereby providing real-time insights that empower these customers to make informed decisions without requiring significant investments in additional technology or infrastructure.

By leveraging the platform's advanced capabilities, smaller customers can access a comprehensive, real-time view of their operations and markets, which was previously unattainable due to technological and financial constraints. The platform's AI-driven insights enable these customers to optimize their inventory, predict future trends, and respond swiftly to market changes, thus enhancing their competitiveness in the tech distribution space. The platform's intuitive SPoG UI ensures that even customers with limited technical expertise can access and interpret complex data insights easily, thereby democratizing access to advanced data-driven decision-making tools.

As described below, the disclosed embodiments addresses the limitations of conventional distribution platforms by providing an integrated, real-time, and data-driven approach to managing distribution processes, optimizing operations, and enhancing customer experiences.

### Single Pane of Glass

The Single Pane of Glass (SPoG) can provide a comprehensive solution that is configured to address these multifaceted challenges. It can be configured to provide an intuitive and efficient platform that provides a distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to facililitate generating end-user views in a customized dashboard for resllers, SPoG integrates data from various OEMs into a single platform. This not only ensures data consistency but also significantly reduces the potential for errors. Furthermore, it provides capabilities to generate B2B and B2C views efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, streamlining inventory management, ensuring compliance, simplifying generating a resller dashboard, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can include implementation(s) of a Real-Time Data Mesh (RTDM), according to some embodiments. The RTDM offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies SKU management and localization by integrating data from various OEMs, ensuring data consistency and reducing error potential. Its capabilities for generating a real-time view of end users with specific needs in the B2B and B2C markets efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. It offers a unified solution to complex problems in the distribution industry. With the RTDM's capabilities, SPoG can enhance supply chain visibility, streamline inventory management, ensure compliance, simplify SKU management, and deliver a superior customer experience.

The real-time tracking and analytics offered by RTDM improve SPoG's ability to manage the supply chain and inventory effectively. It provides accurate and current information, enabling distributors to make informed decisions quickly.

Integrating SPoG with RTDM also ensures data consistency and reduces errors in SKU management. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates an embodiment of a system for distribution management.
FIG. 4 depicts a system for real-time data integration and business insight generation, according to an embodiment.
FIG. 5 illustrates an RTDM module, according to an embodiment.
FIG. 6 illustrates a SPoG UI, according to an embodiment.
FIG. 7 illustrates a system for automated generation of real-time business insights, according to an embodiment.
FIG. 8 is a flow diagram of a method real-time insight generation for business decision making, according to some embodiments of the present disclosure.
FIG. 9 is a flow diagram of a method for performing predictive analytics in inventory management, according to some embodiments of the present disclosure.
FIG. 10 is a flow diagram for automated personalization of marketing initiatives, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

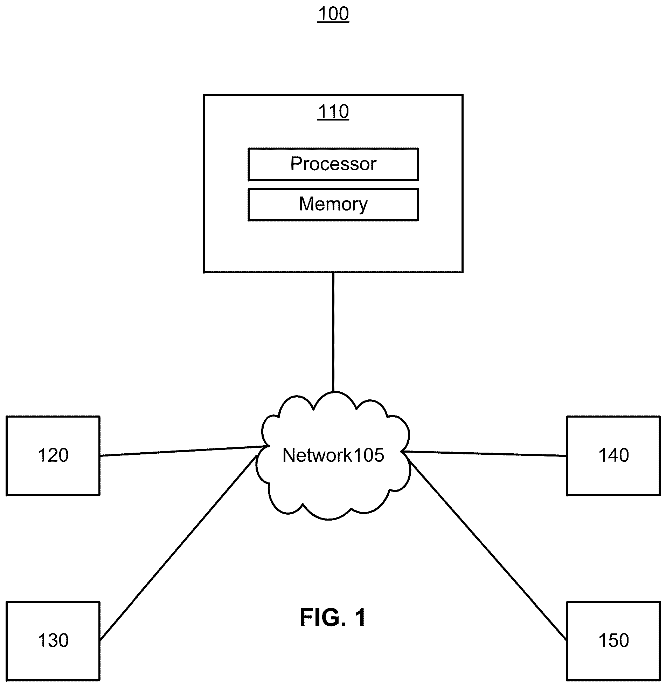

FIG. 1 illustrates an operating environment 100 of a distribution platform, referred to as System 110 in this embodiment. System 110 operates within the context of an information technology (IT) distribution model, catering to various users such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 can be the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a substantial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain operations, manage pricing and promotions, and gain insights into customer preferences and market trends. By integrating with System 110, vendors can expand their reach, access new markets, and enhance their overall visibility and competitiveness.

Resellers 150 can be intermediaries within the distribution model who bridge the gap between vendors and customers. They play a significant role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there can be various dynamics and characteristics that contribute to its effectiveness. These dynamics include real-time data exchange, integration with existing enterprise systems, scalability, and flexibility. System 110 ensures that relevant data can be exchanged in real-time between users, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

System 110 can achieve scalability and flexibility. It can accommodate the growing demands of the IT distribution model, whether it involves an expanding customer base, an increasing number of vendors, or a wider range of IT products and services. System 110 can be configured to handle large-scale data processing, storage, and analysis, ensuring that it can support the evolving needs of the distribution platform. Additionally, System 110 can use a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these users. By leveraging real-time data exchange, integration, scalability, and flexibility, System 110 empowers users to optimize their operations, enhance customer experiences, and drive business success within the IT distribution ecosystem.

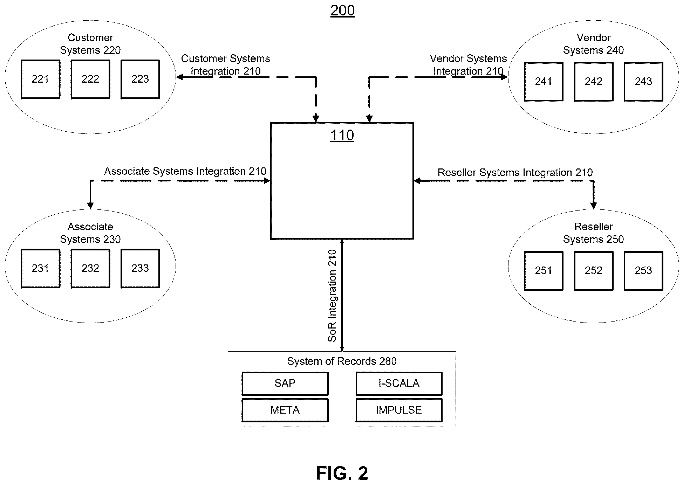

FIG. 2 illustrates an operating environment 200 of the distribution platform, which builds upon the elements introduced in FIG. 1. This operating environment is arranged to integrate real-time business insights across various entities involved in the distribution process, including customer systems 220, vendor systems 240, reseller systems 260, and other associated entities. Integration points 210 facilitate data flow and connectivity, enabling efficient collaboration and data-driven decision-making. This operating environment is configured to provide real-time business insights utilizing advanced Artificial Intelligence (AI) and Machine Learning (ML) technologies to integrate, process, and analyze data. AI algorithms can be applied for real-time inventory management, customer interaction optimization, and data harmonization to ensure a unified user experience. Machine learning models such as neural networks and decision trees can be employed to provide refined and personalized options to users. The system can also use generative AI technologies to aggregate data into a canonical, agnostic format, ensuring data consistency and accuracy.

Operating environment 200 can include System 110 as a distribution platform that serves as the central hub for managing and facilitating the distribution process. System 110 can provide a unified interface for users to manage and view all aspects of the distribution process, ensuring interaction and data consistency. System 110 can be configured to perform functions and operations as a bridge between customer systems 220, vendor systems 240, reseller systems 260, and other entities within the ecosystem. It can integrate communication, data exchange, and transactional processes, providing users with a unified and streamlined experience. Moreover, operating environment 200 can include one or more integration points 210 to ensure smooth data flow and connectivity. These integration points include:

Customer System Integration: Integration point 210 can enable System 110 to connect with customer systems 220, enabling efficient data exchange and synchronization. Customer systems 220 may include various entities such as customer system 221, customer system 222, and customer system 223. These systems represent the internal systems utilized by customers, such as enterprise resource planning (ERP) or customer relationship management (CRM) systems. Integration with customer systems 220 empowers customers to access real-time inventory information, pricing details, order tracking, and other relevant data, enhancing their visibility and decision-making capabilities. The integration with System 110 ensures that customer systems 220 can access real-time inventory information, pricing details, order tracking, and other relevant data, enhancing their visibility and decision-making capabilities. Specifically, the system can receive data requests from customer systems 220, fetch real-time inventory and customization options from its own databases, and return optimized data views. This integration ensures that users have a comprehensive, real-time view of their supply chain and customer interactions, enabling data-driven decision-making and enhanced operational efficiency.

Associate System Integration: Integration point 210 can enable System 110 to connect with associate systems 230, enabling efficient data exchange and synchronization. Associate systems 230 may include various entities such as associate system 231, associate system 232, and associate system 233. Integration with associate systems 230 empowers customers to access real-time inventory information, pricing details, order tracking, and other relevant data, enhancing their visibility and decision-making capabilities.

Vendor System Integration: Integration point 210 facilitates the connection between System 110 and vendor systems 240. Vendor systems 240 may include entities such as vendor system 241, vendor system 242, and vendor system 243, representing the inventory management systems, pricing systems, and product catalogs employed by vendors. Integration with vendor systems 240 ensures that vendors can efficiently update their product offerings, manage pricing and promotions, and receive real-time order notifications and fulfillment details. Integration with System 110 enables vendor systems 240 to efficiently update their product offerings, manage pricing and promotions, and receive real-time order notifications and fulfillment details. Specifically, the system can use AI algorithms to request specific inventory or customization options from the vendor systems, aiding vendors in aligning their stock or manufacturing processes with real-time market demands.

Reseller System Integration: Integration point 210 provides capabilities for reseller systems 260 to connect with System 110. Reseller systems 260 may encompass entities such as reseller system 261, reseller system 262, and reseller system 263, representing the sales systems, customer management systems, and service delivery platforms employed by resellers. Integration with reseller systems 260 empowers resellers to access current product information, manage customer accounts, track sales performance, and provide value-added services to their customers.

Other Entity System Integration: Integration point 210 also enables connectivity with other entities involved in the distribution process. These entities may include entities such as entity system 271, entity system 272, and entity system 273. Integration with these systems ensures communication and data exchange, facilitating collaboration and efficient distribution processes. Integration of real-time business insights with other entity systems ensures that entity systems 271 engage in real-time product interaction and data access processes via System 110.

Integration points 210 also enable connectivity with System of Records 280, for additional data management and integration. System of Records 280 can represent enterprise resource planning (ERP) systems or customer relationship management (CRM) systems, including both future systems as well as legacy ERP systems such as SAP, Impulse, META, I-SCALA, and others. System of Records 280 can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes.

Integration points 210 within the operating environment 200 can be facilitated through standardized protocols, APIs, and data connectors. These mechanisms ensure compatibility, interoperability, and secure data transfer between the distribution platform and the connected systems. System 110 can employ industry-standard protocols, such as RESTful APIs, SOAP, or GraphQL, to establish communication channels and enable data exchange.

In some embodiments, System 110 can incorporate authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable users to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and enhances operational efficiency throughout the distribution platform.

In some embodiments, System 110 can use technologies such as Typescript, NodeJS, ReactJS, .NET Core, C#, and other suitable technologies to support the integration points 210 and enable communication within the operating environment 200. These technologies can provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable users to operate within a connected ecosystem. Data generated at various touchpoints, including customer orders, inventory updates, pricing changes, or delivery status, flows between the different entities, systems, and components. The integrated data can be processed, harmonized, and made available in real-time to relevant users through System 110. This real-time access to accurate and current information empowers users to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, can include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments can include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

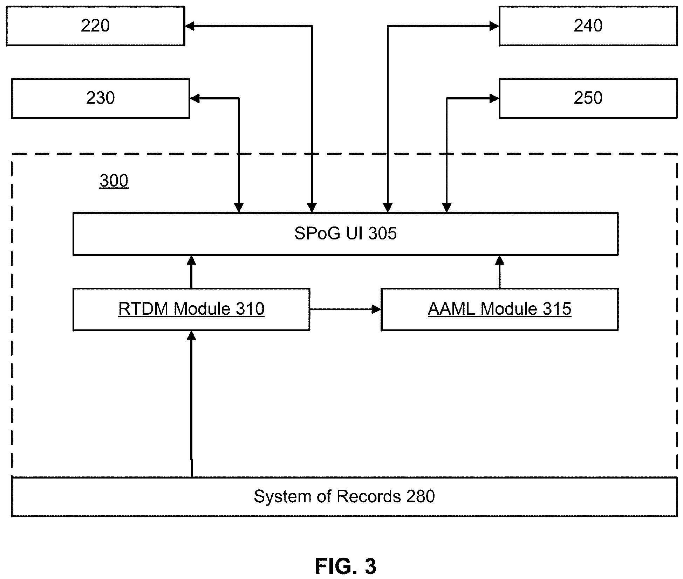

Therefore, operating environment 200 can couple a distribution platform with one or more integration points 210 and data flow to enable efficient collaboration and streamlined distribution processes.FIG. 3 illustrates a system 300 for supply chain and distribution management.

FIG. 3 illustrates system 300 in a supply chain and distribution management solution configured to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing users with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the distribution ecosystem. SPoG UI 305 is designed with a user-centric approach, featuring an intuitive and responsive layout. It utilizes front-end technologies to render dynamic and interactive data visualizations. Customizable dashboards allow users to tailor their views based on specific roles and requirements. The UI supports drag-and-drop functionality for ease of use, and its adaptive design ensures compatibility across various devices and platforms. Advanced filtering and search capabilities enable users to efficiently navigate and access relevant supply chain data and insights.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another component of System 300, configured to ensuring the flow of data within the distribution ecosystem. It aggregates data from multiple sources, harmonizes it, and ensures its availability in real-time.

In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data can be then made available in real-time, allowing users to access accurate and current information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component can be specifically configured to work with various transactional systems, including legacy ERP systems, Customer Relationship Management (CRM) systems, and other enterprise-wide systems, ensuring compatibility and flexibility for businesses operating in diverse environments.

By having access to real-time data, users can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Implementing analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By using machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a unified, interconnected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By implementing a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

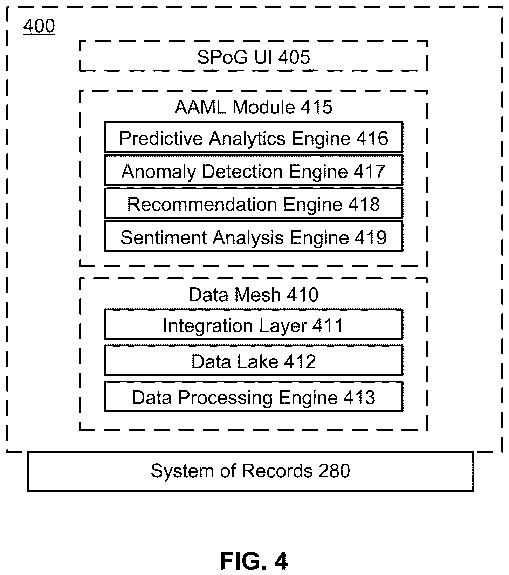

FIG. 4 illustrates a system 400 for Integrated Real-Time Business Insights, configured to provide businesses with immediate, actionable insights from various data sources using AI and ML technologies. The system 400 integrates a SPoG UI 405, a RTDM 410, and an AAML module 415. These components work together to ingest, process, and present data in a unified, intuitive manner, enabling users to make informed decisions rapidly.

The SPoG UI 405 can serve as the primary interface for users, providing access to a comprehensive dashboard that aggregates data and insights from various modules within the system. This interface can be developed using web-based technologies, ensuring compatibility across multiple devices such as desktop computers, laptops, tablets, and smartphones. The SPoG UI 405 can be configured to display interactive charts, graphs, and tables, allowing users to drill down into specific data points for detailed analysis. For instance, a sales manager can view real-time sales performance metrics, inventory levels, and customer engagement statistics all in one place, facilitating quick and effective decision-making.

The RTDM 410 can function as the data layer, configured to ingest data from multiple sources such as ERP systems, CRM systems, online transactions, clickstream data, and third-party databases. This data can then be harmonized into a unified format, ensuring consistency and accuracy across the platform. The RTDM 410 can employ data replication mechanisms to capture real-time changes from transactional systems, making this data immediately available for processing and analysis. For example, inventory data from an ERP system can be continuously updated in the RTDM, allowing the system to provide up-to-the-minute insights into stock levels.

The RTDM 410 can include sub-components such as an Integration Layer 411, a Data Lake 412, and a Data Processing Engine 413. The Integration Layer 411 can connect to various data sources using APIs, webhooks, and data connectors, facilitating data ingestion. The Data Lake 412 can store raw and processed data, providing a scalable and fault-tolerant repository. The Data Processing Engine 413 can apply ETL (Extract, Transform, Load) processes to harmonize and standardize data, ensuring consistency across the platform.

The AAML module 415 can act as the processing layer, employing AI-generated insights and algorithms and machine learning models to analyze the data aggregated by the RTDM 410. This module can be configured to perform tasks such as predictive analytics, anomaly detection, and personalized recommendations. The AAML module 415 can include sub-components such as a Predictive Analytics Engine 416, an Anomaly Detection Engine 417, and a Recommendation Engine 418.

The Predictive Analytics Engine 416 can use time-series forecasting methods such as ARIMA (AutoRegressive Integrated Moving Average) and Prophet to predict future trends based on historical data. Alternatively, the engine can employ machine learning algorithms such as LSTM (Long Short-Term Memory) networks for more complex forecasting tasks. The Anomaly Detection Engine 417 can employ techniques such as isolation forests, DBSCAN (Density-Based Spatial Clustering of Applications with Noise), and autoencoders to identify unusual patterns and outliers in the data. The Recommendation Engine 418 can use collaborative filtering, content-based filtering, and hybrid recommendation systems to generate personalized recommendations for users.

In some non-limiting examples, a sales representative of a vendor can access the SPoG UI 405 to view a comprehensive profile of potential sales prospects, generated by the AAML module 415 based on historical transaction data and customer behavior. The RTDM 410 can ensure that this data is current, providing the sales representative with accurate and timely insights. As a result, the sales representative can engage with prospects more effectively, tailoring their approach based on the insights provided by the system. For example, the AAML module 415 can use clustering algorithms such as k-means or hierarchical clustering to segment customers into different groups based on their purchasing behavior, allowing the sales representative to target each group with a customized sales pitch. Additionally, the Recommendation Engine 418 can suggest the most relevant products or services for each prospect, enhancing the sales representative's ability to close deals.

In another non-limiting example, a supply chain manager of a reseller can utilize the SPoG UI 405 to monitor real-time inventory levels across multiple warehouses, with data continuously ingested and harmonized by the RTDM 410. The AAML module 415 can generate forecasts based on historical sales data and current inventory levels, helping the manager to optimize stock levels and reduce the risk of stockouts or overstock situations. Alerts generated by the AAML module 415 can notify the manager of low stock levels, prompting timely reordering of products. The Predictive Analytics Engine 416 can implement time-series forecasting methods such as ARIMA, Prophet, or LSTM networks to predict future inventory needs, ensuring that the business maintains optimal stock levels at all times. The Anomaly Detection Engine 417 can also identify any irregularities in inventory data, such as sudden drops or spikes in stock levels, and alert the manager to potential issues.

In marketing, an associate of the platform can use system 400 to create personalized marketing campaigns. The AAML module 415 can segment customers based on their purchasing behavior and preferences, as identified from data ingested by the RTDM 410. Marketers can then use the SPoG UI 405 to design and launch targeted campaigns, ensuring that promotional messages reach the most relevant audience. This targeted approach can lead to higher conversion rates and increased customer satisfaction. For instance, the Recommendation Engine 418 can utilize collaborative filtering techniques to identify products that are frequently purchased together and suggest these combinations to customers. Additionally, the AAML module 415 can employ natural language processing (NLP) techniques to analyze customer feedback and social media interactions, providing deeper insights into customer sentiments and preferences. Sentiment analysis algorithms, such as VADER (Valence Aware Dictionary and sEntiment Reasoner) or BERT (Bidirectional Encoder Representations from Transformers), can be used to gauge customer emotions and tailor marketing messages accordingly.

For customer support, a support agent of a vendor can use system 400 to resolve inquiries quickly and effectively. The SPoG UI 405 can provide agents with real-time access to customer data, transaction history, and product information, all aggregated by the RTDM 410. The AAML module 415 can suggest potential solutions to customer issues based on historical data and previous interactions, enabling agents to provide timely and accurate support. In a non-limiting example, the AAML module 415 can employ decision tree algorithms, random forests, or gradient boosting machines to recommend troubleshooting steps for common issues, reducing the time required to resolve customer inquiries. Additionally, the Recommendation Engine 418 can suggest relevant knowledge base articles or FAQs to the support agent, further streamlining the support process.

System 400 can also support strategic business planning by providing executives of a vendor with real-time insights into market trends, business performance, and competitive analysis. The SPoG UI 405 can display detailed reports and dashboards that highlight key performance indicators and strategic opportunities. The RTDM 410 can continuously ingest and harmonize data from multiple sources, ensuring that the information presented to executives is accurate and up-to-date. The AAML module 415 can apply AI and analytics techniques such as regression analysis, clustering, and principal component analysis (PCA) to identify trends and patterns, helping executives to make data-driven decisions and develop effective business strategies. For instance, the Predictive Analytics Engine 416 can use regression models to forecast future revenue based on current sales trends and market conditions, while the Anomaly Detection Engine 417 can identify any significant deviations from expected performance metrics.

To ensure security and data integrity, system 400 can implement robust authentication and authorization mechanisms. The Integration Layer 411 can use OAuth 2.0 and JWT (JSON Web Tokens) for secure API access. Data encryption can be applied both at rest and in transit using AES (Advanced Encryption Standard) and TLS (Transport Layer Security) protocols. Additionally, the system can include auditing and logging mechanisms to track data access and modifications, ensuring compliance with regulatory requirements. The Data Processing Engine 413 can also incorporate data quality checks and validation rules to ensure the accuracy and reliability of the data being processed.

System 400 can be deployed in a cloud-native environment, using containerization technologies such as Docker and orchestration platforms like Kubernetes to ensure scalability and high availability. This cloud-native architecture can enable the system to auto-scale based on workload demands, ensuring optimal performance even during peak usage periods. Additionally, the system can utilize distributed computing frameworks such as Apache Spark to handle large-scale data processing tasks efficiently.

In a non-limiting use case, system 400 can be configured to enable small resellers without robust infrastructure to harness real-time data integration capabilities. System 400 includes a SPoG UI 405, a Real-Time Data Mesh (RTDM) 410, and an Advanced Analytics and Machine Learning (AAML) module 415. These components work together to ingest, harmonize, and analyze data from multiple sources such as vendor systems, CRM systems, and third-party databases.

For a small reseller with limited technical capabilities, the system provides real-time insights into product availability, pricing fluctuations, and demand forecasts without requiring the reseller to invest in complex data infrastructure. The SPoG UI 405 allows the reseller to monitor key metrics in an intuitive, visual format, such as current stock levels and predicted sales trends. This information can be derived from data continuously ingested by the RTDM 410, which harmonizes input from various sources into a standardized format.

In a non-limiting example, a small reseller uses the system to monitor inventory levels across multiple vendors. The AAML module 415 generates forecasts using historical sales data, enabling the reseller to proactively manage stock by suggesting optimal reorder points. The system also identifies anomalies, such as sudden price drops or spikes in demand, and notifies the reseller via the SPoG UI 405, allowing timely decisions. By integrating predictive analytics, the system helps the reseller avoid stockouts and overstock situations, thus maximizing efficiency and profitability.

Thereby, system 400 uses the SPoG UI 405, RTDM 410, and AAML module 415 to deliver a comprehensive solution for integrated real-time business insights.

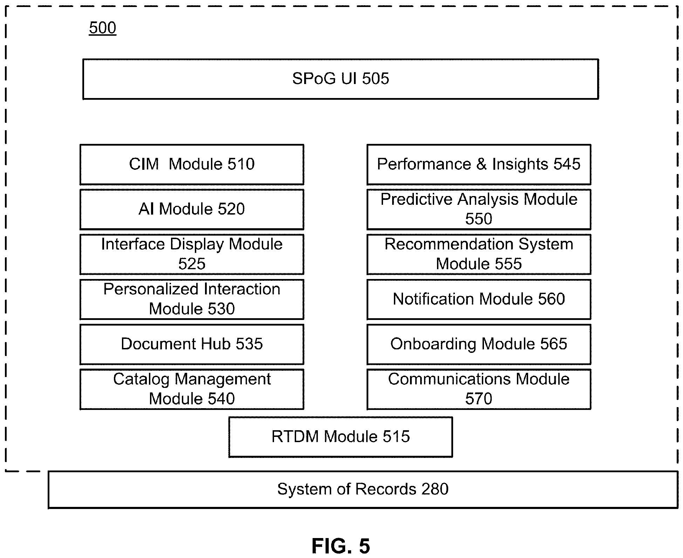

FIG. 5 depicts an embodiment of an advanced distribution platform including System 500 for managing a complex distribution network, which can be an embodiment of System 300, and provides a technology distribution platform for optimizing the management and operation of distribution networks. System 500 includes several interconnected modules, each serving specific functions and contributing to the overall efficiency of supply chain operations. In some embodiments, these modules can include SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570.

System 500, as an embodiment of System 300, can use a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 505, in some embodiments, serves as the central interface within System 500, providing users with a unified view of the entire distribution network. It utilizes frontend technologies such as ReactJS, TypeScript, and Node.js to create interactive and responsive user interfaces. These technologies enable the SPoG UI 505 to deliver a user-friendly experience, allowing users to access relevant information, navigate through different modules, and perform tasks efficiently.

The CIM 510, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for users.

The RTDM module 515, or Real-Time Data Mesh module, is a component of System 500 that ensures the smooth flow of data across the distribution ecosystem. It utilizes technologies such as Apache Kafka, Apache Flink, or Apache Pulsar for data ingestion, processing, and stream management. These technologies enable the RTDM module 515 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows users to access current and accurate information for informed decision-making.

The AI module 520 within System 500 can use advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 520 can utilize predictive models to forecast demand, allowing users to optimize inventory management and minimize stockouts or overstock situations.

The Interface Display Module 525 focuses on presenting data and information in a clear and user-friendly manner. It utilizes technologies such as HTML, CSS, and JavaScript frameworks like ReactJS to create interactive and responsive user interfaces. These technologies allow users to visualize data using various data visualization techniques, such as graphs, charts, and tables, enabling efficient data comprehension, comparison, and trend analysis.

The Personalized Interaction Module 530 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 535 serves as a centralized repository for storing and managing documents within System 500. It utilizes technologies like SeeBurger and Elastic Cloud for efficient document management, storage, and retrieval. For instance, the Document Hub 535 can employ SeeBurger's document management capabilities to categorize and organize documents based on their types, such as contracts, invoices, product specifications, or compliance documents, allowing users to easily access and retrieve relevant documents when needed.

The Catalog Management Module 540 enables the creation, management, and distribution of current product catalogs. It ensures that users have access to the latest product information, including specifications, pricing, availability, and promotions. Technologies like Kentico and Akamai can be employed to facilitate catalog updates, content delivery, and caching. For example, the module can use Akamai's content delivery network (CDN) to deliver catalog information to users quickly and efficiently, regardless of their geographical location.

The Performance and Insight Markers Display 545 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling users to take proactive measures to optimize operations.

The Predictive Analytics Module 550 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing users to optimize inventory levels and minimize costs.

The Recommendation System Module 555 focuses on providing intelligent recommendations to users within the distribution network. It generates personalized recommendations for products or services based on customer data, historical trends, and machine learning algorithms. Technologies like Adobe Target and Apache Spark can be employed for data analysis, modeling, and delivering targeted recommendations. For instance, the module can use Adobe Target's recommendation engine to analyze customer preferences and behavior, and deliver personalized product recommendations across various channels, enhancing customer engagement and driving sales.

The Notification Module 560 enables the distribution of real-time notifications to users regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to users' devices, ensuring timely and relevant information dissemination.

The Self-Onboarding Module 565 facilitates the onboarding process for new users entering the distribution network. It provides guided steps, tutorials, or documentation to help users become familiar with the system and its functionalities. Technologies such as Okta and Kentico can be employed to ensure secure user authentication, access control, and self-learning resources. For instance, the module can utilize Okta's identity and access management capabilities to securely onboard new users, providing them with appropriate access permissions and guiding them through the system's functionalities.

The Communication Module 570 enables communication and collaboration within System 500. It provides channels for users to interact, exchange messages, share documents, and collaborate on projects. Technologies like Apigee Edge and Adobe Launch can be employed to facilitate secure and efficient communication, document sharing, and version control. For example, the module can utilize Apigee Edge's API management capabilities to ensure secure and reliable communication between users, enabling them to collaborate effectively.

Thereby, System 500 can incorporate various modules that utilize a diverse range of technologies and algorithms to optimize supply chain and distribution management. These modules, including SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

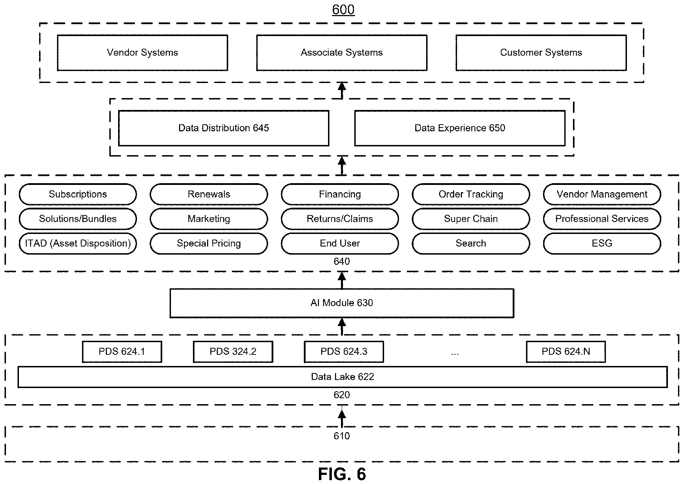

FIG. 6 illustrates RTDM module 600, according to an embodiment. RTDM module 600, which can be an embodiment of RTDM module 310, can include interconnected components, processes, and sub-systems configured to enable real-time data management and analysis.

The RTDM module 600, as depicted in FIG. 5, represents an effective data mesh and change capture component within the overall system architecture. The module can be configured to provide real-time data management and standardization capabilities, enabling efficient operations within the supply chain and distribution management domain.

RTDM module 600 can include an integration layer 610 (also referred to as a "system of records") that integrates with various enterprise systems. These enterprise systems can include ERPs such as SAP, Impulse, META, and I-SCALA, among others, and other data sources. Integration layer 610 can process data exchange and synchronization between RTDM module 600 and these systems. Data feeds can be established to retrieve relevant information from the system of records, such as sales orders, purchase orders, inventory data, and customer information. These feeds enable real-time data updates and ensure that the RTDM module operates with the most current and accurate data.

RTDM module 600 can include data layer 620 configured to process and translate data for retrieval and analysis. Data layer 620 includes data mesh, a cloud-based infrastructure configured to provide scalable and fault-tolerant data storage capabilities. Within the data mesh, multiple Purposive Datastores (PDS) can be deployed to store specific types of data, such as customer data, product data, or inventory data. Each PDS can be optimized for efficient data retrieval based on specific use cases and requirements. The PDSes can be configured to store specific types of data, such as customer data, product data, finance data, and more. These PDS serve as repositories for canonized and/or standardized data, ensuring data consistency and integrity across the system.

In some embodiments, RTDM module 600 implements a data replication mechanism to capture real-time changes from multiple data sources, including transactional systems like ERPs (e.g., SAP, Impulse, META, I-SCALA). The captured data can then be processed and standardized on-the-fly, transforming it into a standardized format suitable for analysis and integration. This process ensures that the data is readily available and current within the data mesh, facilitating real-time insights and decision-making.

More specifically, data layer 620 within the RTDM module 600 can be configured as a powerful and flexible foundation for managing and processing data within the distribution ecosystem. In some embodiments, data layer 620 can encompasses a highly scalable and robust data lake, which can be referred to as data lake 622, along with a set of purposive datastores (PDSes), which can be denoted as PDSes 624.1 to 624.N. These components integrate to ensure efficient data management, standardization, and real-time availability.

Data layer 620 incudes data lake 622, a state-of-the-art storage and processing infrastructure configured to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Using the elasticity and fault-tolerance of cloud-based storage, data lake 622 can accommodate the influx of data from diverse sources.

Associated with data lake 622, a population of purposive datastores, PDSes 624.1 to 624.N, can be employed. Each PDS 624 can function as a purpose-built repository optimized for storing and retrieving specific types of data relevant to the supply chain domain. In some non-limiting examples, PDS 624.1 may be dedicated to customer data, storing information such as customer profiles, preferences, and transaction history. PDS 624.2 may be focused on product data, encompassing details about SKU codes, descriptions, pricing, and inventory levels. These purposive datastores allow for efficient data retrieval, analysis, and processing, catering to the diverse needs of supply chain users.

To ensure real-time data synchronization, data layer 620 can be configured to employ one or more change data capture (CDC) mechanisms. These CDC mechanisms can be integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 620 ensures that the data within the data lake 622 and PDSes 624 remains current, providing users with real-time insights into the distribution ecosystem.

In some embodiments, data layer 620 can be implemented to facilitate integration with existing enterprise systems using one or more frameworks, such as .NET or Java, ensuring compatibility with a wide range of existing systems and providing flexibility for customization and extensibility. For example, data layer 620 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 620 can use the capabilities of distributed computing frameworks, such as Apache Spark or Apache Flink in some non-limiting examples. These frameworks can enable parallel processing and distributed computing across large-scale datasets stored in the data lake and PDSes. By incorporating these frameworks, supply chain users can perform complex analytical tasks, apply machine learning algorithms, and derive valuable insights from the data. For instance, data layer 620 can use Apache Spark's machine learning libraries to develop predictive models for demand forecasting, optimize inventory levels, and identify potential supply chain risks.

In some embodiments, data layer 620 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 620 can implement data lineage and audit trail mechanisms, allowing users to trace the origin and history of data, ensuring data integrity and compliance with regulatory requirements.

In some embodiments, data layer 620 can be deployed in a cloud-native environment, ning containerization technologies such as Docker and orchestration frameworks like Kubernetes. This approach ensures scalability, resilience, and efficient resource allocation. For example, data layer 620 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 620 of RTDM module 600 can incorporate a highly scalable data lake, data lake 622, along with purpose-built PDSes, PDSes 624.1 to 624.N, and employing CDC mechanisms, data layer 620 ensures efficient data management, standardization, and real-time availability. In a non-limiting example, Data Layer 620 can be implemented utilizing any appropriate technology, such as .NET or Java, and/or distributed computing frameworks like Apache Spark, enables powerful data processing, advanced analytics, and machine learning capabilities. With robust data governance and security measures, data layer 620 ensures data integrity, confidentiality, and compliance. Through its scalable infrastructure and integration with existing systems, data layer 620 enables supply chain users to make data-driven decisions, optimize operations, and drive business success in the dynamic and complex distribution environment.

RTDM module 600 can include an AI module 630 configured to implement one or more algorithms and machine learning models to analyze the stored data in data layer 620 and derive meaningful insights. In some non-limiting examples, AI module 630 can apply predictive analytics, anomaly detection, and optimization algorithms to identify patterns, trends, and potential risks within the supply chain. AI module 630 can continuously learns from new data inputs and adapts its models to provide accurate and current insights. AI module 630 can generate predictions, recommendations, and alerts and publish such insights to dedicated data feeds.

Data engine layer 640 comprises a set of interconnected systems configured to data ingestion, processing, transformation, and integration. Data engine layer 640 of RTDM module 600 can include a collection of headless engines 640.1 to 640.N that operate autonomously. These engines represent distinct functionalities within the system and can include, for example, one or more recommendation engines, insights engines, and subscription management engines. Engines 640.1 to 640.N can use the standardized data stored in the data mesh to deliver specific business logic and services. Each engine can be configured to be pluggable, allowing for flexibility and future expansion of the module's capabilities. Exemplary engines are shorn in FIG. 5, which are not intended to be limiting. Any additional headless engine can be included in data engine layer 640 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms can be applied to cleanse, aggregate, and enrich the data, making it ready for further analysis and integration.

Further, to facilitate integration and access to RTDM module 600, a data distribution mechanism can be employed. Data distribution mechanism 645 can be configured to include one or more APIs to facilitate distribution of data from the data mesh and engines to various endpoints, including user interfaces, micro front ends, and external systems.

Experience layer 650 focuses on delivering an intuitive and user-friendly interface for interacting with supply chain data. Experience layer 650 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 600 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, current information and insights to make informed decisions and optimize supply chain operations. Accordingly, RTDM module 600 facilitates supply chain and distribution management by providing a scalable, real-time data management solution. Its innovative architecture allows for the rich integration of disparate data sources, efficient data standardization, and advanced analytics capabilities. The module's ability to replicate and standardize data from diverse ERPs, while maintaining auditable and repeatable transactions, provides a distinct advantage in enabling a unified view for vendors, resellers, customers, end customers, and other entities in a distribution system, including an IT distribution system.

### INTEGRATING REAL-TIME BUSINESS INSIGHTS

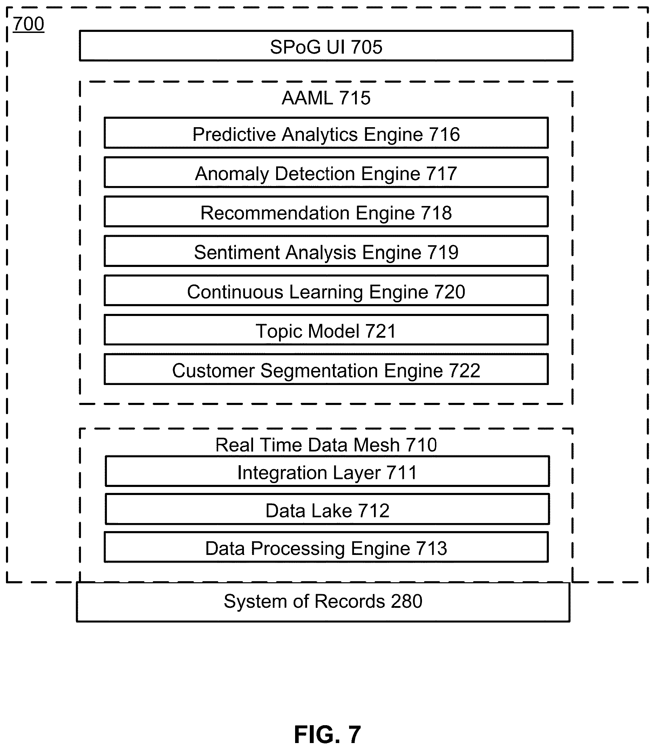

FIG. 7 illustrates a system 700 for Integrated Real-Time Business Insights, configured to provide comprehensive real-time analytics and actionable insights to vendors, resellers, associates, and customers. This system builds upon foundational concepts and incorporates unique and enhanced features to ensure robust, scalable, and adaptable data processing capabilities. The system integrates a SPoG UI 705, a RTDM 710, and an AAML module 715, along with additional sub-components and algorithms for processing and analyzing data.

The SPoG UI 705 can serve as the primary interface for users, offering a unified view of data and insights from multiple sources. It can be configured to provide an interactive and customizable dashboard where users can visualize data through charts, graphs, and tables. The SPoG UI 705 can be developed using web technologies such as HTML5, CSS3, and JavaScript frameworks like React.js or Angular.js to ensure responsiveness and compatibility across different devices. Users can interact with the dashboard to drill down into specific data points, filter information, and generate reports tailored to their needs. For instance, a vendor can use the SPoG UI 705 to monitor real-time sales performance, track inventory levels, and analyze customer engagement metrics.

The RTDM 710 can function as the core data layer, configured to ingest, harmonize, and manage data from various sources such as ERP systems, CRM systems, online transactions, clickstream data, and third-party APIs. The RTDM 710 can include an Integration Layer 711, a Data Lake 712, and a Data Processing Engine 713. The Integration Layer 711 can facilitate data ingestion using APIs, webhooks, and data connectors, enabling real-time data flow into the system. The Data Lake 712 can provide a scalable and fault-tolerant repository for storing raw and processed data, ning technologies like Apache Hadoop and Amazon S3 for distributed storage. The Data Processing Engine 713 can apply ETL (Extract, Transform, Load) processes to standardize and harmonize data, ensuring consistency and accuracy across the platform. The Data Processing Engine 713 can utilize Apache Spark for large-scale data processing and Apache Kafka for real-time data streaming.

The AAML module 715 can act as the analytical and processing layer, employing algorithms and machine learning models to extract valuable insights from the data aggregated by the RTDM 710. The AAML module 715 can include sub-components such as a Predictive Analytics Engine 716, an Anomaly Detection Engine 717, and a Recommendation Engine 718. The Predictive Analytics Engine 716 can use time-series forecasting methods such as ARIMA (AutoRegressive Integrated Moving Average), Prophet, and models like LSTM (Long Short-Term Memory) networks for forecasting tasks. These algorithms can predict future trends based on historical data, enabling proactive decision-making. For example, the Predictive Analytics Engine 716 can forecast future sales trends for a vendor, allowing them to adjust inventory and marketing strategies accordingly.

The Anomaly Detection Engine 717 can employ techniques such as isolation forests, DBSCAN (Density-Based Spatial Clustering of Applications with Noise), and autoencoders to identify unusual patterns and outliers in the data. These algorithms can help vendors and resellers detect irregularities in sales data, such as sudden drops or spikes in order volume, and take corrective actions promptly. The Recommendation Engine 718 can use collaborative filtering, content-based filtering, and hybrid recommendation systems to generate personalized recommendations for users. For instance, the Recommendation Engine 718 can suggest relevant products to a reseller based on past purchase behavior and current market trends.

In some embodiments, system 700 can incorporate edge computing to process data closer to its source, reducing latency and bandwidth usage. This integration can enable real-time insights and decision-making, particularly for applications requiring low latency, such as IoT (Internet of Things) devices in retail and supply chain management. Edge nodes can perform preliminary data processing and send aggregated results to the central RTDM 710 for further analysis.

The AAML module 715 can include Generative Adversarial Networks (GANs) to enhance data generation and augmentation. GANs can create synthetic data that mimics real-world data, improving the training of machine learning models, particularly in scenarios where data is scarce or imbalanced. For example, GANs can generate additional sales transaction records to train the Predictive Analytics Engine 716 more effectively.

System 700 can employ federated learning to train machine learning models across decentralized data sources without transferring raw data to a central server. This approach can enhance data privacy and security while allowing the system to leverage data from multiple vendors and resellers. The AAML module 715 can aggregate model updates from different nodes, combine them, and improve overall model accuracy without compromising data privacy.

The AAML module 715 can incorporate AI-generated insights and natural language processing (NLP) techniques, including transformers like BERT (Bidirectional Encoder Representations from Transformers) and GPT (Generative Pre-trained Transformer). These models can enable more accurate sentiment analysis, entity recognition, and text summarization, providing deeper insights into customer feedback, social media interactions, and support tickets. For instance, BERT can be used to analyze customer reviews and extract key themes, helping vendors understand customer sentiments and preferences.

System 700 can integrate explainable AI (XAI) techniques to make machine learning models more interpretable and transparent. This feature can help users understand how predictions and recommendations are generated, increasing trust in the system. The AAML module 715 can provide visual explanations and feature importance scores, allowing users to see which factors influenced a particular prediction or recommendation.

In some embodiments, system 700 can include robust security measures beyond OAuth 2.0, JWT, AES, and TLS protocols. These measures can incorporate homomorphic encryption and secure multi-party computation (SMPC), enabling secure data processing and analysis without exposing sensitive information, further enhancing data privacy and security.

System 700 can incorporate continuous learning mechanisms to update machine learning models in real-time as new data becomes available. The AAML module 715 can use online learning algorithms, such as stochastic gradient descent (SGD) and reinforcement learning, to adapt models continuously, ensuring that predictions and recommendations remain accurate and relevant.

In some non-limiting examples, a sales representative of a vendor can access the SPoG UI 705 to view a comprehensive profile of potential sales prospects, generated by the AAML module 715 based on historical transaction data and customer behavior. The RTDM 710 can ensure that this data is current, providing the sales representative with accurate and timely insights. As a result, the sales representative can engage with prospects more effectively, tailoring their approach based on the insights provided by the system. For instance, the AAML module 715 can use clustering algorithms such as k-means or hierarchical clustering to segment customers into different groups based on their purchasing behavior, allowing the sales representative to target each group with a customized sales pitch. Additionally, the Recommendation Engine 718 can suggest the most relevant products or services for each prospect, enhancing the sales representative's ability to close deals.

In another non-limiting example, a supply chain manager of a reseller can utilize the SPoG UI 705 to monitor real-time inventory levels across multiple warehouses, with data continuously ingested and harmonized by the RTDM 710. The AAML module 715 can generate forecasts based on historical sales data and current inventory levels, helping the manager to optimize stock levels and reduce the risk of stockouts or overstock situations. Alerts generated by the AAML module 715 can notify the manager of low stock levels, prompting timely reordering of products. The Predictive Analytics Engine 716 can implement time-series forecasting methods such as ARIMA, Prophet, or LSTM networks to predict future inventory needs, ensuring that the business maintains optimal stock levels at all times. The Anomaly Detection Engine 717 can also identify any irregularities in inventory data, such as sudden drops or spikes in stock levels, and alert the manager to potential issues.

For marketing purposes, an associate of the platform can use system 700 to create personalized marketing campaigns. The AAML module 715 can segment customers based on their purchasing behavior and preferences, as identified from data ingested by the RTDM 710. Marketers can then use the SPoG UI 705 to design and launch targeted campaigns, ensuring that promotional messages reach the most relevant audience. This targeted approach can lead to higher conversion rates and increased customer satisfaction. For instance, the Recommendation Engine 718 can utilize collaborative filtering techniques to identify products that are frequently purchased together and suggest these combinations to customers. Additionally, the AAML module 715 can employ natural language processing (NLP) techniques to analyze customer feedback and social media interactions, providing deeper insights into customer sentiments and preferences. Sentiment analysis algorithms, such as VADER (Valence Aware Dictionary and sEntiment Reasoner) or BERT (Bidirectional Encoder Representations from Transformers), can be used to gauge customer emotions and tailor marketing messages accordingly.

For customer support, a support agent of a vendor can use system 700 to resolve inquiries quickly and effectively. The SPoG UI 705 can provide agents with real-time access to customer data, transaction history, and product information, all aggregated by the RTDM 710. The AAML module 715 can suggest potential solutions to customer issues based on historical data and previous interactions, enabling agents to provide timely and accurate support. In a non-limiting example, the AAML module 715 can employ decision tree
algorithms, random forests, or gradient boosting machines to recommend troubleshooting steps for common issues, reducing the time required to resolve customer inquiries. Additionally, the Recommendation Engine 718 can suggest relevant knowledge base articles or FAQs to the support agent, further streamlining the support process.

System 700 can also support strategic business planning by providing executives of a vendor with real-time insights into market trends, business performance, and competitive analysis. The SPoG UI 705 can display detailed reports and dashboards that highlight key performance indicators and strategic opportunities. The RTDM 710 can continuously ingest and harmonize data from multiple sources, ensuring that the information presented to executives is accurate and up-to-date. The AAML module 715 can apply AI and analytics techniques such as regression analysis, clustering, and principal component analysis (PCA) to identify trends and patterns, helping executives to make data-driven decisions and develop effective business strategies. For instance, the Predictive Analytics Engine 716 can use regression models to forecast future revenue based on current sales trends and market conditions, while the Anomaly Detection Engine 717 can identify any significant deviations from expected performance metrics.

To ensure security and data integrity, system 700 can implement robust authentication and authorization mechanisms. The Integration Layer 711 can use OAuth 2.0 and JWT (JSON Web Tokens) for secure API access. Data encryption can be applied both at rest and in transit using AES (Advanced Encryption Standard) and TLS (Transport Layer Security) protocols. Additionally, the system can include auditing and logging mechanisms to track data access and modifications, ensuring compliance with regulatory requirements. The Data Processing Engine 713 can also incorporate data quality checks and validation rules to ensure the accuracy and reliability of the data being processed.

System 700 can be deployed in a cloud-native environment, using containerization technologies such as Docker and orchestration platforms like Kubernetes to ensure scalability and high availability. This cloud-native architecture can enable the system to auto-scale based on workload demands, ensuring optimal performance even during peak usage periods. Additionally, the system can utilize distributed computing frameworks such as Apache Spark to handle large-scale data processing tasks efficiently.

In one embodiment, system 700 can be configured to provide smaller customers with comprehensive real-time business insights through the integration of the SPoG UI 705, RTDM 710, and AAML module 715. These components empower customers, especially smaller businesses, to access actionable insights without needing to build or maintain their own data analytics infrastructure.

For a small vendor lacking advanced technology infrastructure, the system provides real-time insights into sales performance, customer behavior, and market trends. The RTDM 710 continuously ingests data from various sources such as CRM systems and vendor supply chain data, harmonizing it for analysis by the AAML module 715. The AAML module 715 applies machine learning algorithms to forecast demand, detect anomalies, and generate personalized recommendations, which are displayed through the SPoG UI 705.

In a non-limiting example, a small vendor with no in-house data analytics capability can leverage the system to predict product demand over the next quarter. The Predictive Analytics Engine 716 within the AAML module 715 forecasts sales trends using historical data, while the Anomaly Detection Engine 717 alerts the vendor to potential disruptions in supply chains. The system's Recommendation Engine 718 suggests inventory adjustments and promotional strategies based on the insights generated. This functionality allows smaller vendors to make data-driven decisions, increase operational efficiency, and ultimately improve their competitiveness in the market. Thereby, system 700 implements the SPoG UI 705, RTDM 710, and AAML module 715 to deliver a comprehensive solution for integrated real-time business insights.

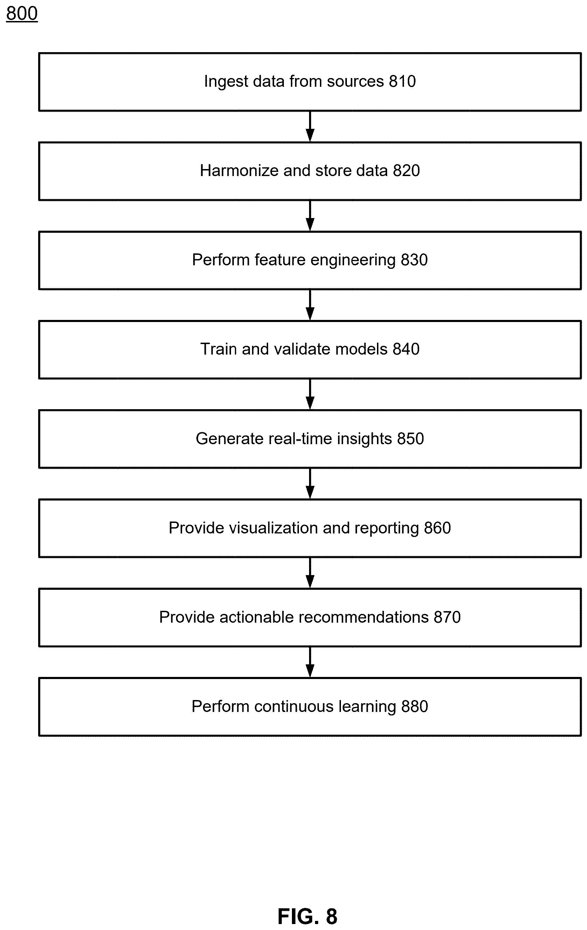

FIG. 8 illustrates a flow diagram of method 800 for real-time insight generation, configured to provide actionable business insights from diverse data sources using AI, analytics and machine learning techniques.

At operation 810, the RTDM 710 ingests data from various sources such as ERP systems, CRM systems, online transactions, clickstream data, and third-party APIs. In some embodiments, the RTDM 710 facilitates real-time data flow using APIs, webhooks, and data connectors. The Integration Layer 711 manages the connections to these data sources, ensuring continuous data ingestion. For example, sales data from an ERP system and customer interaction data from a CRM system can be ingested in real-time, allowing the system to maintain an up-to-date repository of relevant business information.

At operation 820, the Data Processing Engine 713 harmonizes and stores the ingested data. The Data Processing Engine 713 applies ETL (Extract, Transform, Load) processes to harmonize the ingested data. This process involves data standardization, deduplication, and normalization to ensure consistency across different data sources. The harmonized data is then stored in the Data Lake 712, which provides a scalable and fault-tolerant repository for both raw and processed data. Technologies such as Apache Hadoop and Amazon S3 can be employed to ensure distributed and reliable storage, accommodating the large volumes of data typical in real-time business analytics.

At operation 830, the Data Processing Engine 713 performs feature engineering. The system creates new variables to enhance the performance of machine learning models. This step can involve aggregating data over different time periods, calculating ratios, and deriving new metrics. For example, the system can compute customer lifetime value (CLV) by aggregating historical purchase data and deriving metrics such as average order value and purchase frequency. These engineered features provide more informative input to machine learning models, improving their predictive accuracy and relevance.

At operation 840, the AAML module 715 trains and validates machine learning models. These models can include regression algorithms, classification algorithms, and clustering algorithms, depending on the specific insights being sought. In some embodiments, the system employs cross-validation techniques to evaluate model performance and select the best models for generating insights. For instance, the system can train a regression model to predict future sales based on historical sales data and external factors like seasonality. The AAML module 715 ensures that the models are robust and generalizable, minimizing overfitting and maximizing their predictive power.

At operation 850, the AAML module 715 generates real-time insights by applying the trained models to new data. These insights can include predictions, recommendations, and anomaly detections. The Predictive Analytics Engine 716 can forecast future trends such as sales, demand, and inventory levels. The Anomaly Detection Engine 717 can identify unusual patterns in the data, such as unexpected drops in sales or spikes in customer complaints. The Recommendation Engine 718 can suggest actions based on these insights, such as product recommendations, marketing strategies, and inventory adjustments. For example, the Predictive Analytics Engine 716 can forecast a surge in demand for a particular product, prompting the system to recommend increasing inventory levels to avoid stockouts.

At operation 860, the SPoG UI 705 visualizes the generated insights through interactive dashboards, charts, and graphs. Users can customize their views, drill down into specific data points, and generate detailed reports. In some non-limiting examples, a vendor can view a real-time dashboard showing sales forecasts, inventory levels, and customer satisfaction scores. The system can provide alerts and recommendations based on these insights, helping the vendor make informed decisions. For instance, the dashboard can highlight an impending stockout situation, allowing the vendor to take preemptive action.

At operation 870, the system provides actionable recommendations based on the generated insights. These recommendations can be tailored to the specific needs and goals of the users. The Recommendation Engine 718 can suggest optimal inventory reorder points based on predicted demand, recommend personalized marketing strategies based on customer segmentation, and highlight potential issues that require immediate attention based on anomaly detection. For example, the system can recommend increasing the marketing budget for a particular customer segment that shows high potential for conversion, based on the sentiment analysis of their feedback.

At operation 880, the AAML module 715 incorporates continuous learning mechanisms to update the machine learning models in real-time as new data becomes available. This ensures that the insights and recommendations remain accurate and relevant. In some embodiments, the AAML module 715 uses online learning algorithms, such as stochastic gradient descent (SGD) and reinforcement learning, to adapt models continuously. The system can also incorporate feedback loops where user actions and outcomes are fed back into the models for ongoing improvement. For example, if a marketing strategy recommended by the system leads to a significant increase in sales, this positive outcome can be used to reinforce the model's learning process.

In a non-limiting example, a marketing manager of a reseller can use the SPoG UI 705 to access real-time insights generated by the system. The marketing manager can view a dashboard that shows customer segmentation based on purchasing behavior, sentiment analysis from social media interactions, and predicted response rates for different marketing campaigns. The Recommendation Engine 718 can suggest personalized marketing strategies for each customer segment, such as targeted email campaigns, promotional offers, and product recommendations. The marketing manager can use these insights to design and launch effective marketing campaigns, monitor their performance in real-time, and adjust strategies based on the system's recommendations.

In another non-limiting example, a supply chain manager of a vendor can utilize the SPoG UI 705 to monitor real-time inventory levels, sales forecasts, and supplier performance metrics. The system can provide actionable insights such as optimal reorder points, potential stockouts, and supplier delivery delays. The Predictive Analytics Engine 716 can forecast future demand for different products, allowing the supply chain manager to adjust inventory levels proactively. The Anomaly Detection Engine 717 can alert the manager to any irregularities in inventory data, such as sudden drops in stock levels, enabling timely corrective actions. For instance, if the system detects a potential stockout situation, it can recommend placing an order with a supplier to replenish stock levels before the anticipated demand spike.

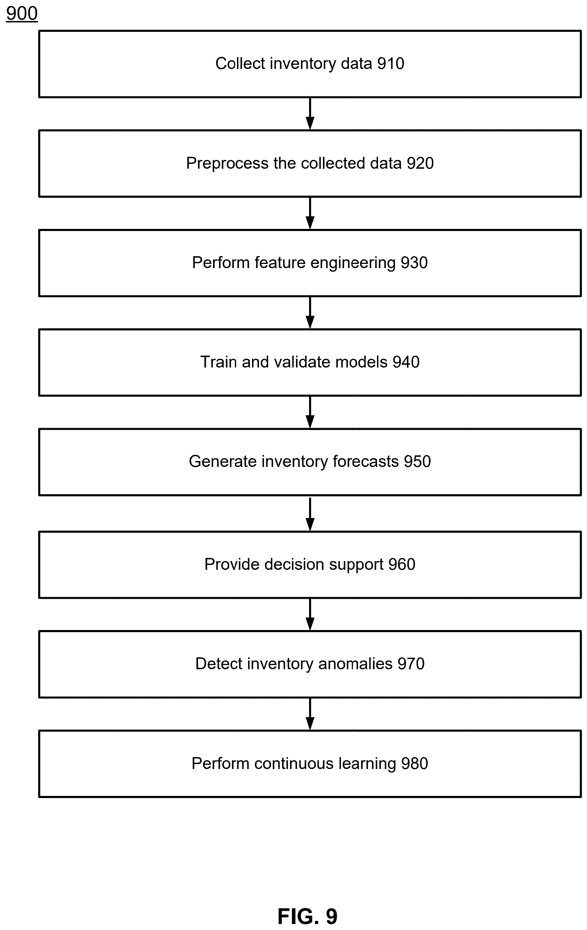

FIG. 9 illustrates a method 900 for predictive analytics in inventory management, configured to forecast future inventory needs and optimize stock levels. This method uses historical data, AI, algorithms, and machine learning models to generate actionable insights for supply chain managers.

At operation 910, the RTDM 710 collects inventory data from multiple sources, including ERP systems, warehouse management systems, and point-of-sale systems. This data is ingested continuously by the Integration Layer 711, ensuring real-time updates. The collected data can include inventory levels, sales transactions, supplier delivery schedules, and historical stock data. For example, the system can gather information on current stock levels, sales history, and upcoming supplier deliveries to provide a comprehensive view of inventory status.

At operation 920, the Data Processing Engine 713 preprocesses the collected data to remove noise and handle missing values. This step involves data cleaning, normalization, and transformation. The system can use techniques such as interpolation to estimate missing inventory levels and outlier detection to identify and correct erroneous data points. For instance, if there are gaps in the inventory records, the system can fill these gaps using interpolation methods, ensuring that the data is complete and ready for analysis.

At operation 930, the Data Processing Engine 713 performs feature engineering to create new variables that enhance the performance of predictive models. This step can involve aggregating data over different time windows, calculating moving averages, and extracting seasonal patterns. For example, the system can compute the average sales volume for each product over the past month and identify seasonal trends in demand. These engineered features provide more informative input to machine learning models, improving their predictive accuracy.

At operation 940, the AAML module 715 trains machine learning models using the preprocessed and engineered data. The Predictive Analytics Engine 716 employs algorithms such as ARIMA (AutoRegressive Integrated Moving Average), Prophet, and LSTM (Long Short-Term Memory) networks to capture temporal dependencies and forecast future trends. The system can use techniques such as cross-validation to evaluate model performance and select the best-performing model. For instance, the system can train a time-series model to predict future sales based on historical sales data and external factors like seasonality.

At operation 950, the Predictive Analytics Engine 716 generates inventory forecasts by applying the trained models to new data. These forecasts can predict future inventory levels, demand fluctuations, and potential stockouts or overstock situations. In some embodiments, the system can generate short-term and long-term forecasts to provide a comprehensive view of future inventory needs. For example, the system can forecast the demand for a particular product over the next three months, considering factors such as seasonal trends, historical sales patterns, and promotional activities.

At operation 960, the system provides decision support by generating actionable recommendations based on the inventory forecasts. These recommendations can include reorder points, optimal stock levels, and supplier order schedules. The SPoG UI 705 displays these recommendations to supply chain managers, enabling them to make informed decisions about inventory management. For instance, the system can suggest placing an order with a supplier to replenish stock levels before an anticipated demand spike, ensuring that the business maintains optimal inventory levels at all times.

At operation 970, the Anomaly Detection Engine 717 identifies any irregularities in inventory data that may indicate potential issues. This step involves monitoring real-time inventory levels and comparing them against expected patterns. If the system detects significant deviations, such as sudden drops or spikes in stock levels, it provides actionable insights for addressing the anomalies. For example, if the system detects an unexpected decrease in inventory for a particular product, it can recommend actions such as conducting an immediate inventory audit, investigating potential losses, or adjusting future orders to compensate for the discrepancy.

At operation 980, the system incorporates continuous learning mechanisms to update the predictive models in real-time as new data becomes available. The AAML module 715 uses online learning algorithms, such as stochastic gradient descent (SGD) and reinforcement learning, to adapt models continuously. This ensures that the inventory forecasts and recommendations remain accurate and relevant. For example, if there is a sudden change in consumer demand due to external factors, the system can quickly adapt to these changes, updating the inventory forecasts accordingly.

In a non-limiting example, a supply chain manager of a reseller can use the SPoG UI 705 to monitor real-time inventory levels across multiple warehouses. The RTDM 710 continuously ingests and harmonizes data from various sources, providing a comprehensive view of the inventory status. The Predictive Analytics Engine 716 generates forecasts based on historical sales data and current inventory levels, helping the manager to optimize stock levels and reduce the risk of stockouts or overstock situations. Alerts generated by the Anomaly Detection Engine 717 notify the manager of low stock levels, prompting timely reordering of products. For instance, if the system forecasts a high demand for a particular product during an upcoming promotional event, it can recommend increasing inventory levels to avoid stockouts.

In another non-limiting example, a supply chain manager of a vendor can utilize the SPoG UI 705 to access real-time insights into supplier performance metrics and delivery schedules. The system can provide actionable recommendations such as optimal reorder points and supplier order schedules based on predicted demand. The manager can use these insights to negotiate better terms with suppliers and ensure timely delivery of products. For example, if the system detects a potential delay in supplier delivery, it can recommend placing orders earlier or finding alternative suppliers to maintain optimal inventory levels.

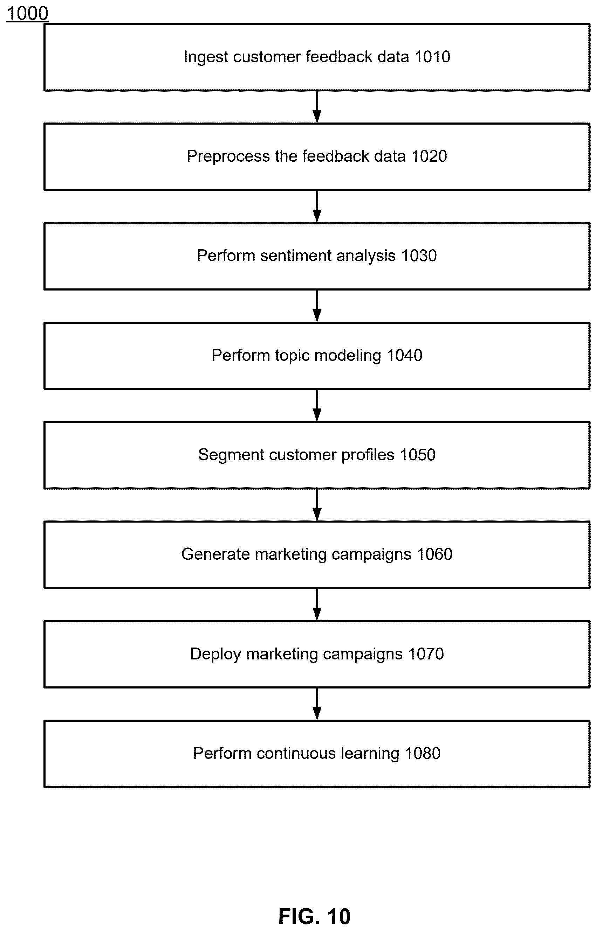

FIG. 10 illustrates a method 1000 for creating personalized marketing campaigns using AI-generated insights and natural language processing (NLP) techniques, configured to analyze customer feedback and generate targeted marketing messages. This method uses diverse data sources, NLP models, and machine learning algorithms to tailor marketing strategies effectively.

At operation 1010, the RTDM 710 ingests customer feedback from various sources, including social media platforms, online reviews, customer support tickets, and survey responses. The Integration Layer 711 ensures continuous and real-time data flow from these sources, capturing a wide range of text-based feedback, ratings, and customer interaction logs. For instance, the system can gather social media comments about product experiences, customer reviews on e-commerce platforms, and feedback from customer support interactions.

At operation 1020, the Data Processing Engine 713 preprocesses the text data to prepare it for NLP analysis. This step involves tokenization, stemming, lemmatization, and removal of stop words. The system converts text feedback into a structured format by breaking it down into individual tokens and normalizing the text by converting it to lowercase and removing punctuation. For example, the phrase "The product quality is excellent!" can be tokenized and normalized to "product quality excellent," making it ready for further analysis.

At operation 1030, the AAML module 715 performs sentiment analysis using AI-generated insights and NLP models such as BERT (Bidirectional Encoder Representations from Transformers) and GPT (Generative Pre-trained Transformer). These models analyze the sentiment of customer feedback, classifying it as positive, negative, or neutral. For instance, BERT can determine the overall sentiment of a customer review based on contextual word embeddings, identifying whether the feedback reflects satisfaction or dissatisfaction with a product or service.

At operation 1040, the AAML module 715 uses topic modeling techniques such as Latent Dirichlet Allocation (LDA) to identify key themes and topics within the customer feedback. The system can cluster similar feedback into common topics, providing insights into customer concerns, preferences, and areas for improvement. For example, LDA can group feedback related to product quality, customer service, and pricing, allowing marketers to understand the primary themes in customer sentiments.

At operation 1050, the AAML module 715 segments customers based on their feedback and interaction history. This step involves clustering algorithms such as k-means or hierarchical clustering to group customers with similar sentiments and preferences. The system creates customer profiles that include demographic information, purchase history, and sentiment analysis results. For instance, customers who frequently leave positive feedback about product quality can be grouped together, enabling targeted marketing efforts.

At operation 1060, the Recommendation Engine 718 generates personalized marketing messages and campaign content based on the identified topics and customer segments. The system uses techniques such as collaborative filtering and content-based filtering to recommend products and offers tailored to each customer segment. For example, the system can suggest a discount on high-rated products to customers who have expressed satisfaction with similar items in the past.

At operation 1070, the SPoG UI 705 facilitates the deployment of personalized marketing campaigns through various channels, including email, social media, and in-app notifications. Marketers can design, schedule, and launch these campaigns using the SPoG UI 705, which provides tools for campaign management. The system tracks the performance of each campaign, providing real-time analytics on customer engagement, conversion rates, and overall effectiveness. For instance, the SPoG UI 705 can display metrics such as open rates, click-through rates, and sales generated from the campaign, allowing marketers to monitor and adjust their strategies as needed.

At operation 1080, the system incorporates continuous learning mechanisms to update the marketing models in real-time as new data becomes available. The AAML module 715 uses online learning algorithms, such as stochastic gradient descent (SGD) and reinforcement learning, to adapt models continuously. This ensures that the marketing strategies remain effective and relevant. For example, if a new trend in customer feedback emerges, the system can quickly incorporate this information into the marketing models, adjusting recommendations and strategies accordingly.

In a non-limiting example, a marketing manager of a reseller can use the SPoG UI 705 to access real-time insights generated by the system. The marketing manager can view a dashboard that shows customer segmentation based on purchasing behavior, sentiment analysis from social media interactions, and predicted response rates for different marketing campaigns. The Recommendation Engine 718 can suggest personalized marketing strategies for each customer segment, such as targeted email campaigns, promotional offers, and product recommendations. The marketing manager can use these insights to design and launch effective marketing campaigns, monitor their performance in real-time, and adjust strategies based on the system's recommendations.

In another non-limiting example, a marketing manager of a vendor can utilize the SPoG UI 705 to access detailed reports on customer sentiment and feedback trends. The system can provide actionable recommendations such as tailoring marketing messages to address common customer concerns, using positive feedback in promotional materials, and targeting specific customer segments with personalized offers. For example, if the system identifies a significant number of positive reviews about a particular product feature, the marketing manager can highlight this feature in upcoming campaigns to attract new customers and retain existing ones.

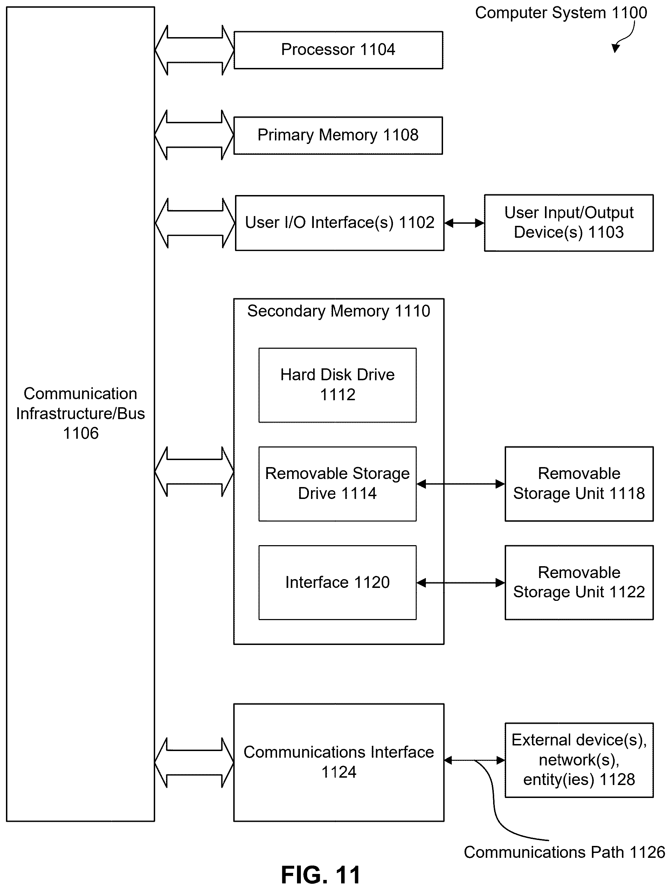

FIG. 11 depicts a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

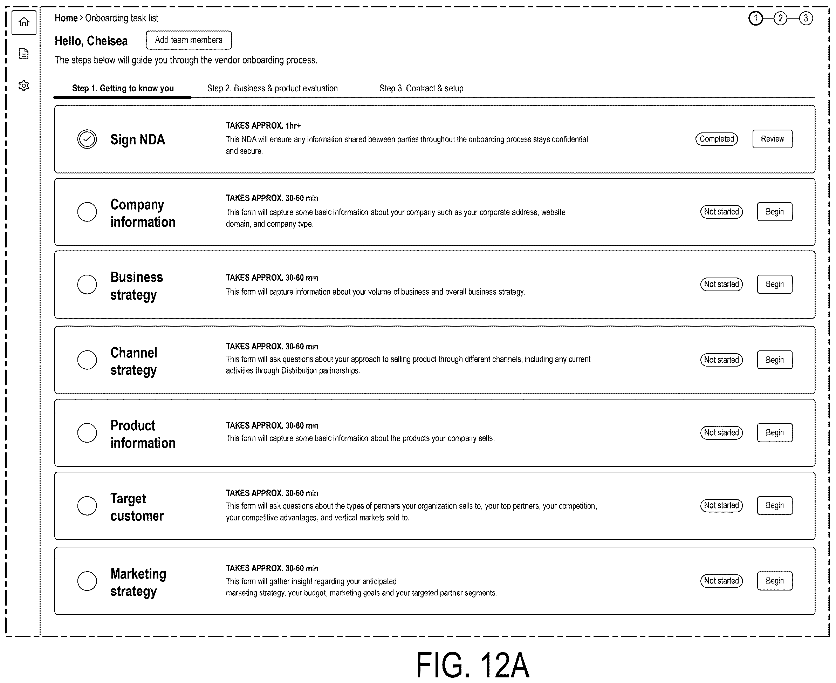

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 12A depicts a Vendor Onboarding Initiation screen that represents the initial step of the vendor onboarding process. It provides a form or interface where vendors can express their interest in joining the distribution ecosystem. Vendors can enter their basic information, such as company details, contact information, and product catalogs.

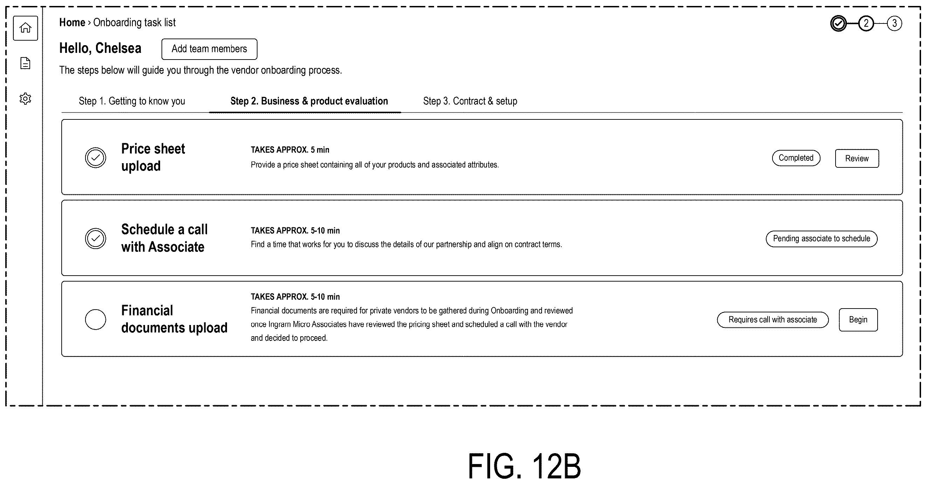

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

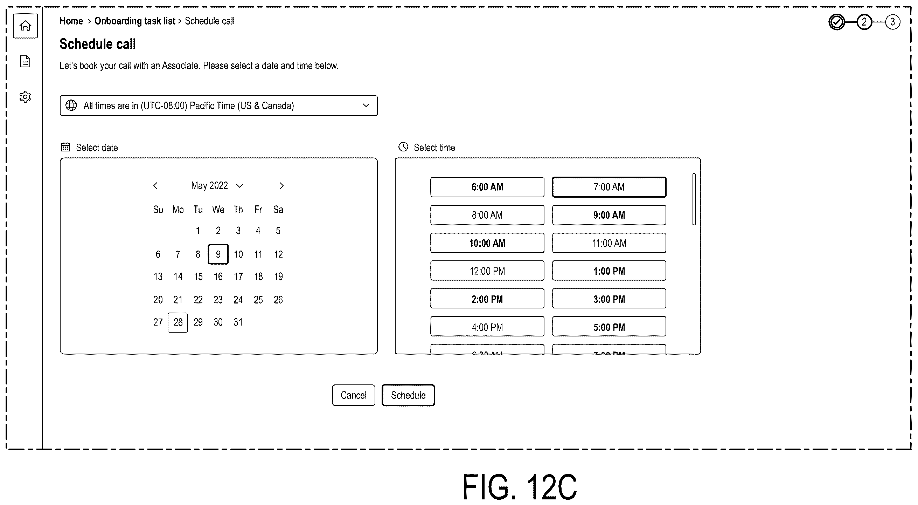

FIG. 12C depicts a Vendor Onboarding Call Scheduler that facilitates scheduling calls or meetings between vendors and platform associates or representatives configured to guiding them through the onboarding process. Vendors can select suitable time slots or request a call, ensuring effective communication and assistance throughout the onboarding journey.

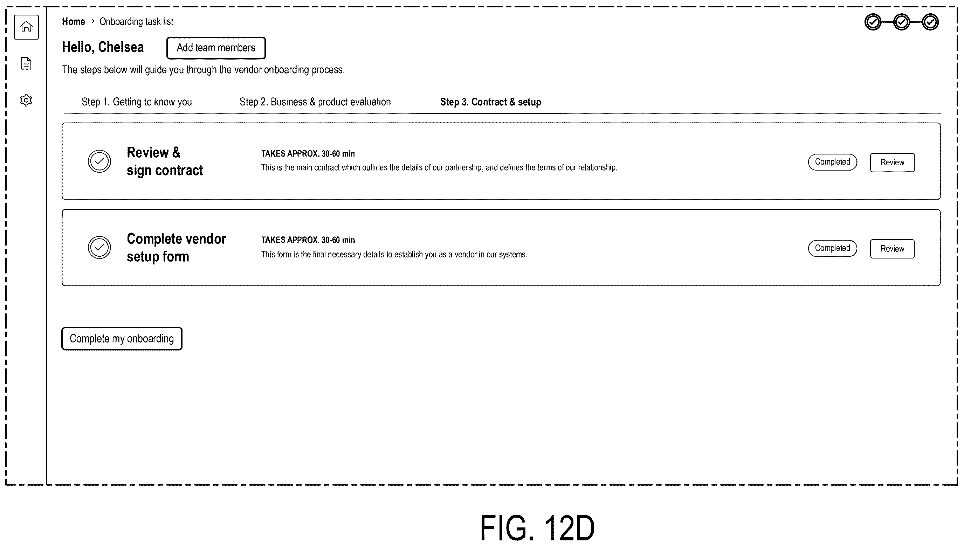

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

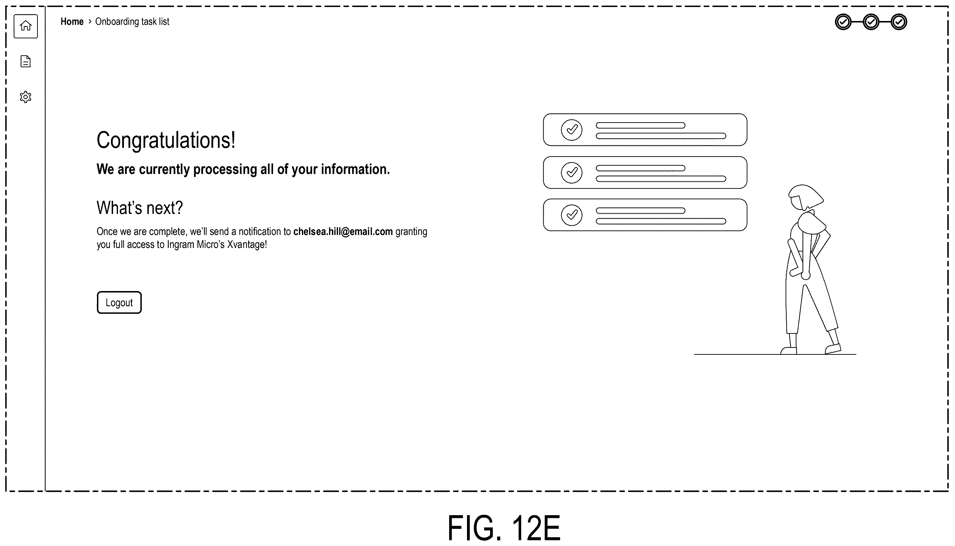

FIG. 12E depicts a Vendor Onboarding Completion Screen that confirms the successful completion of the vendor onboarding process. It may display a congratulatory message or summary of the completed tasks, indicating that the vendor is now officially onboarded into the distribution ecosystem.

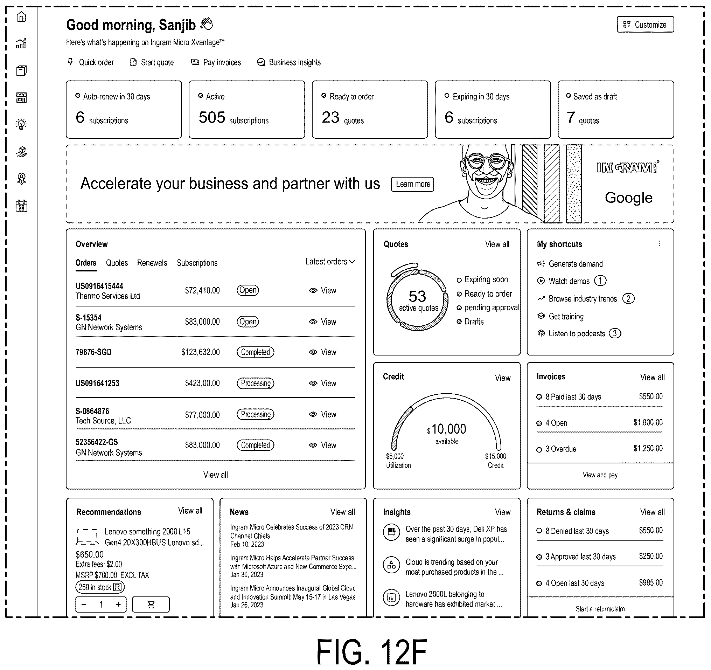

FIG. 12F depicts a Partner Dashboard that offers partners or users a centralized view of relevant information and metrics related to their partnership with the distribution ecosystem. It provides an overview of performance indicators, key data points, and actionable insights to facilitate effective collaboration and decision-making.

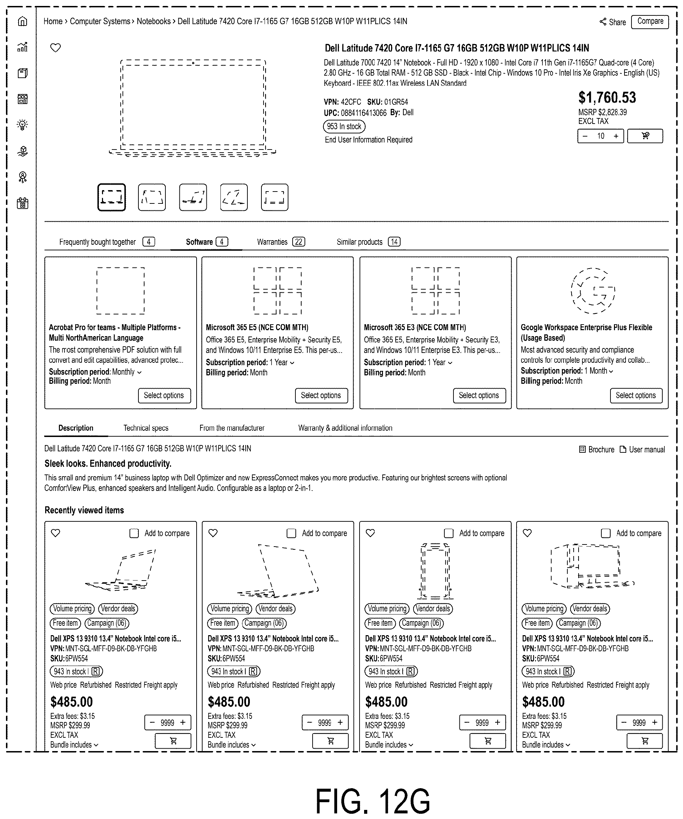

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

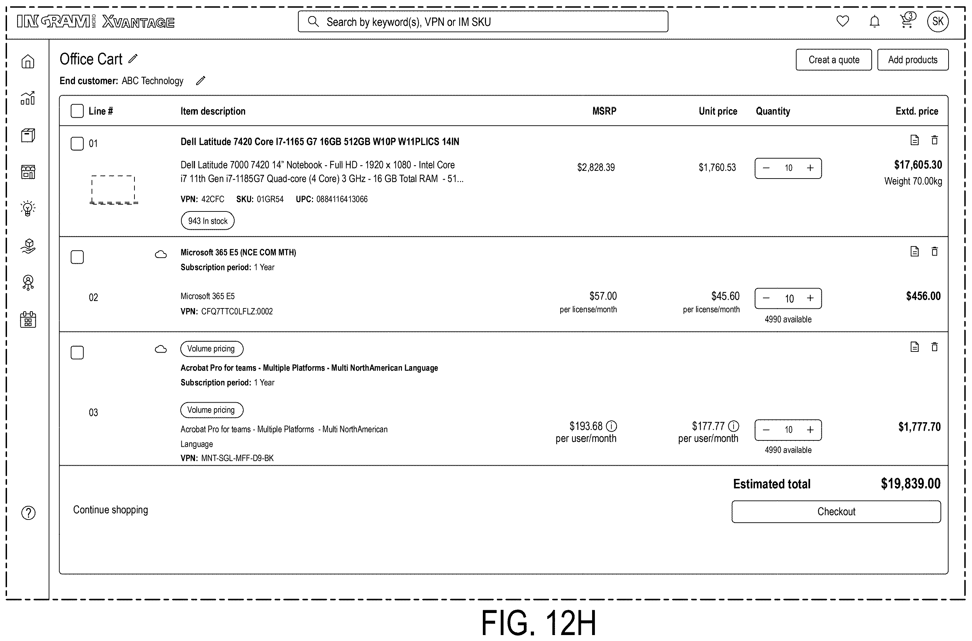

FIG. 12H depicts a Customer Subscription Cart that allows customers to manage their subscription-based purchases. It displays the selected subscription plans, pricing, and duration. Customers can review and modify their subscription details before finalizing their choices.

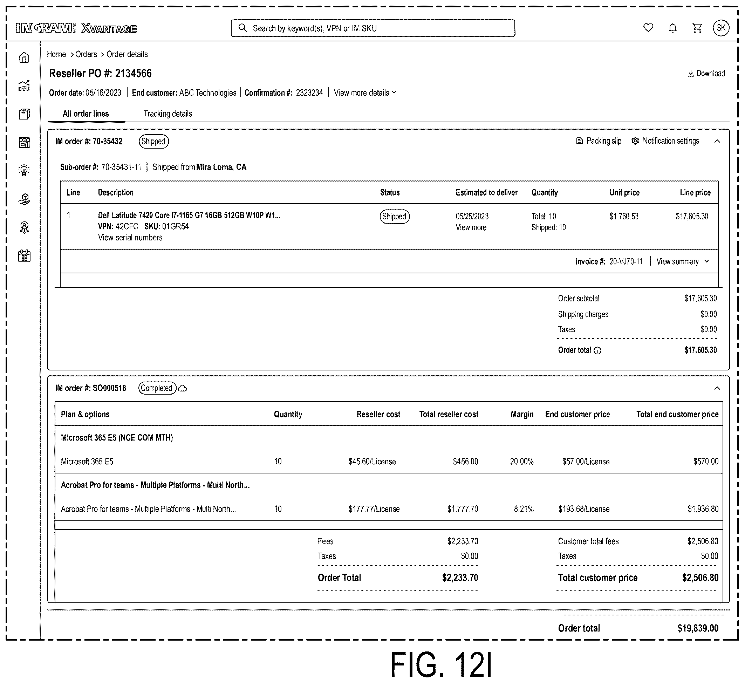

FIG. 12I depicts a Customer Order Summary that provides a summary of the customer's order, including details such as the products or subscriptions purchased, quantities, pricing, and any applied discounts or promotions. It allows customers to review their order before confirming the purchase.

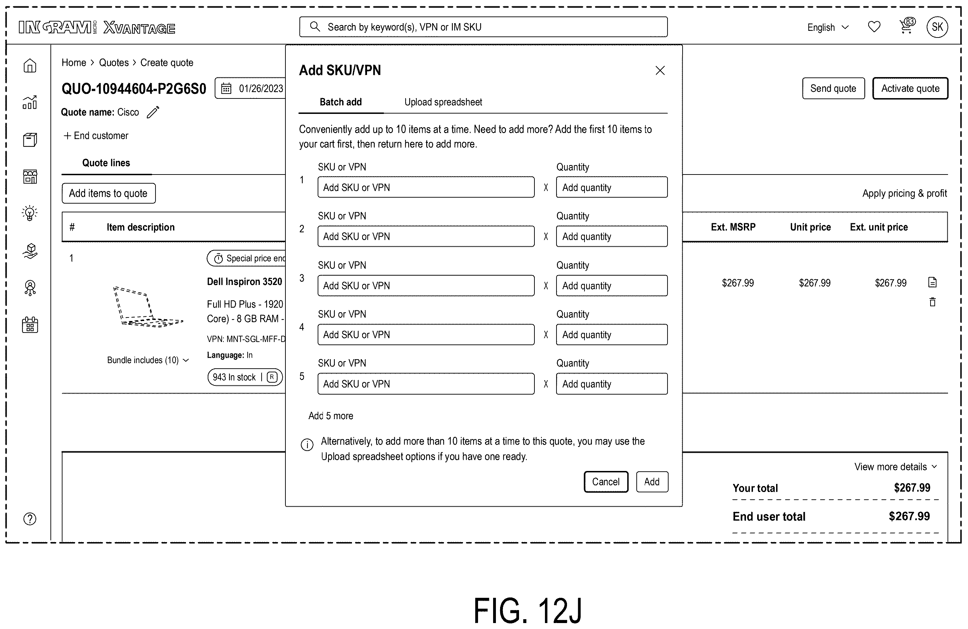

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

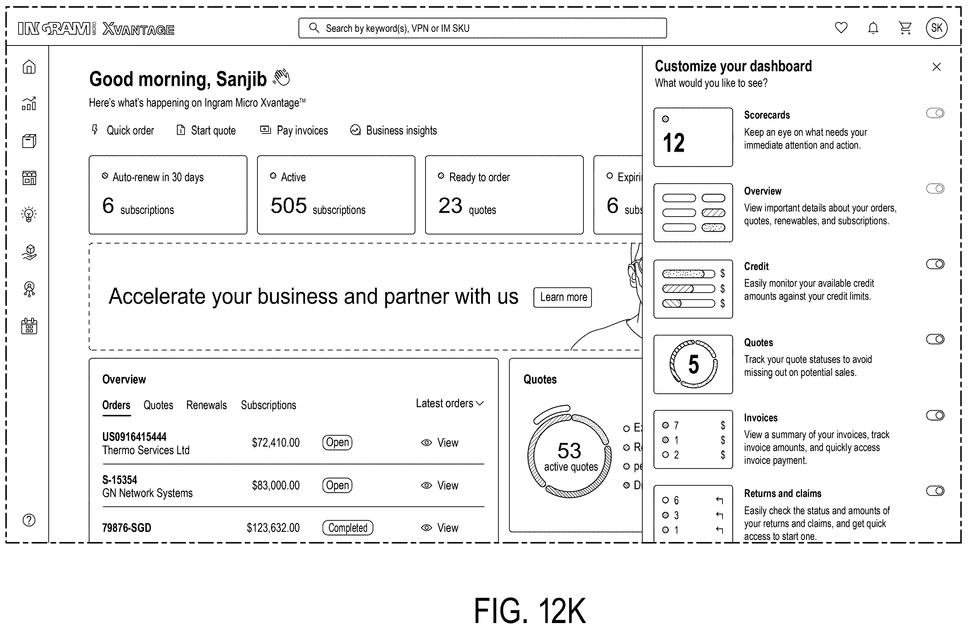

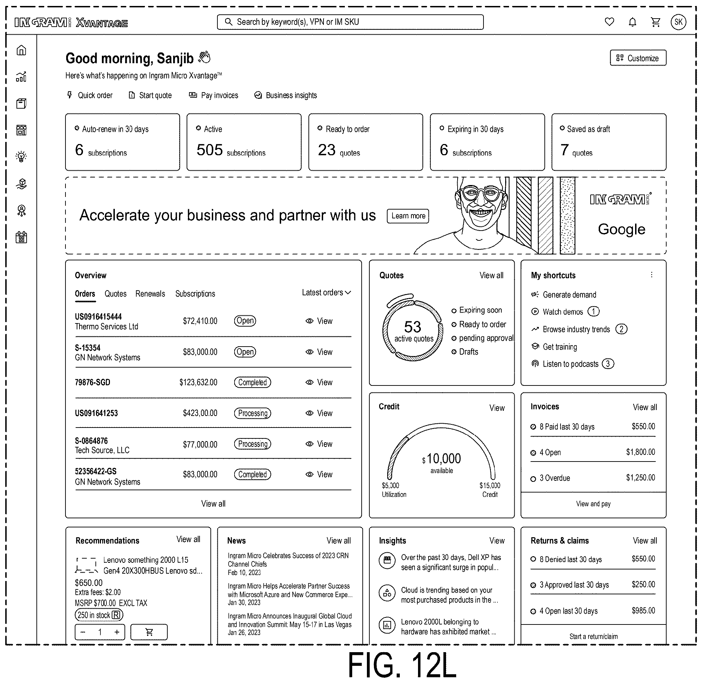

FIGS. 12K and 12L depicts Dashboard Order Summary to display summarized information about orders placed within the distribution ecosystem. They present key order details, such as order number, customer name, product or subscription information, quantity, and order status. The dashboard provides an overview of order activity, enabling users to track and manage orders efficiently.

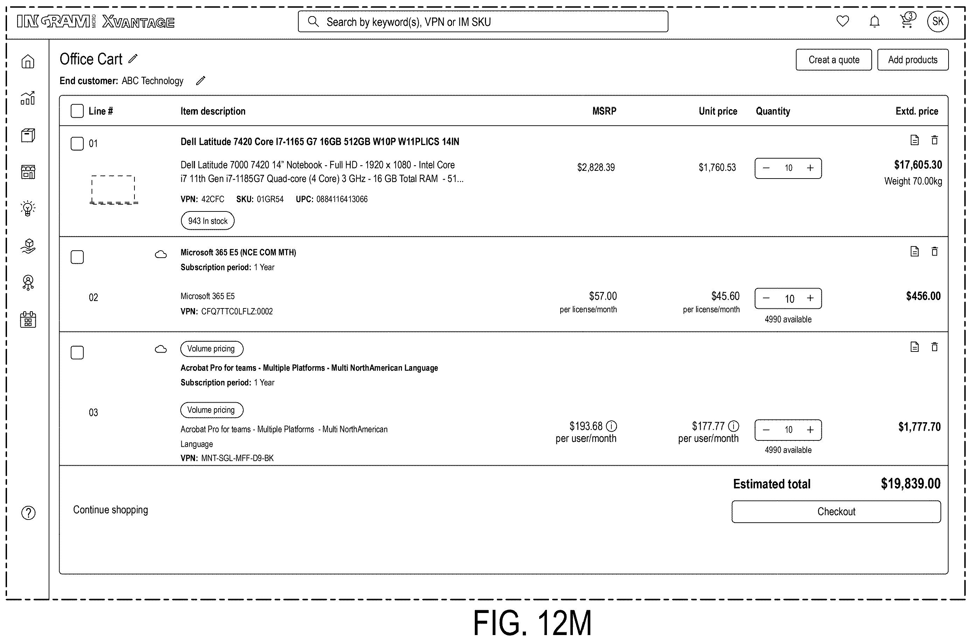

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

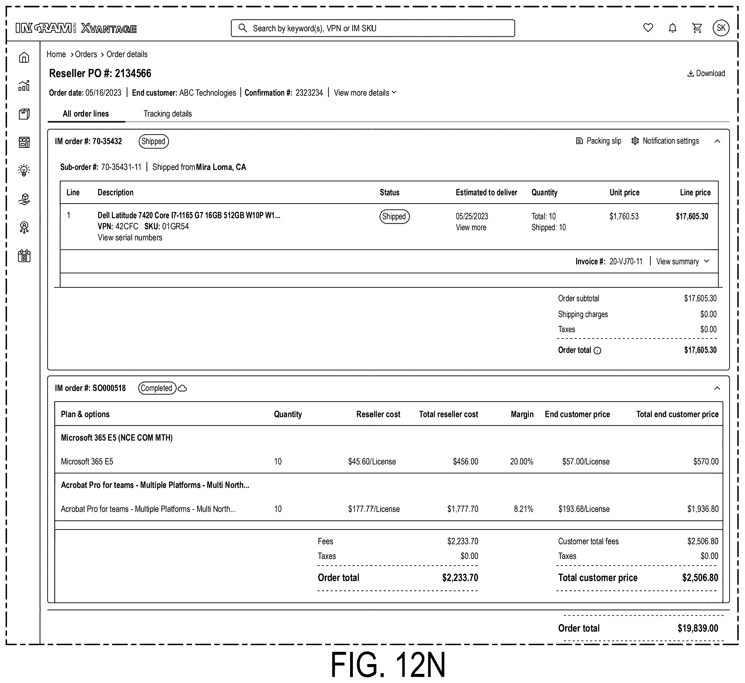

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

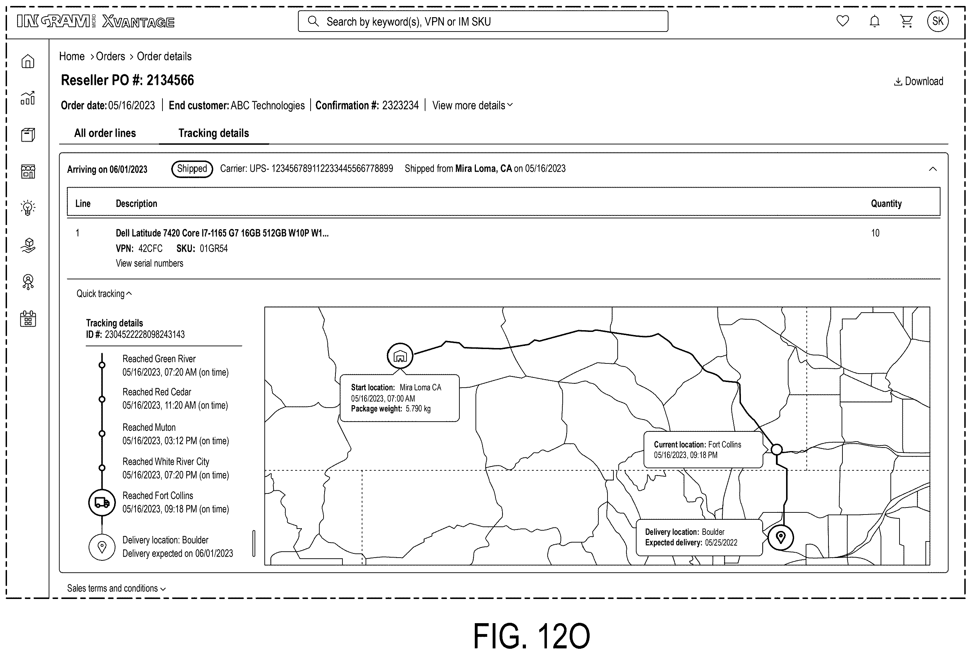

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

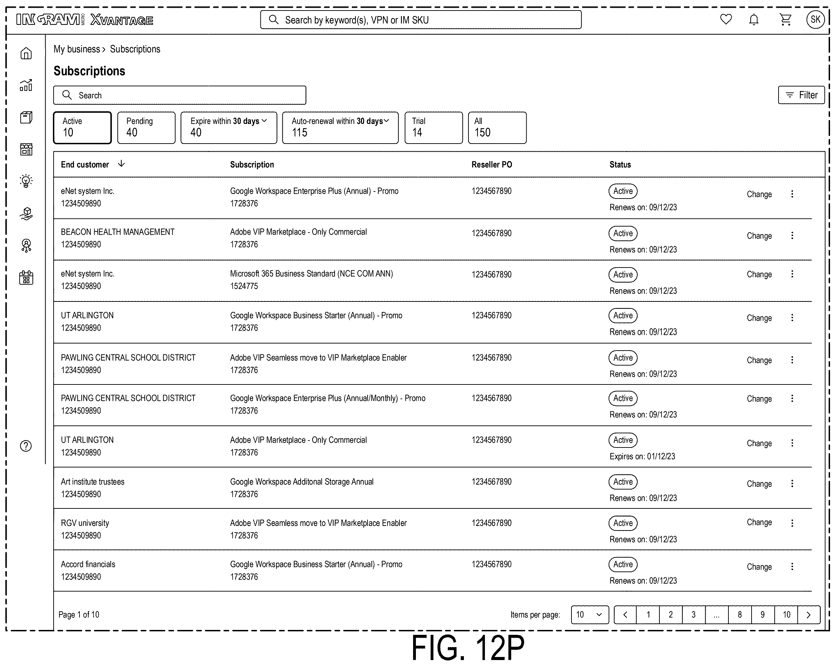

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

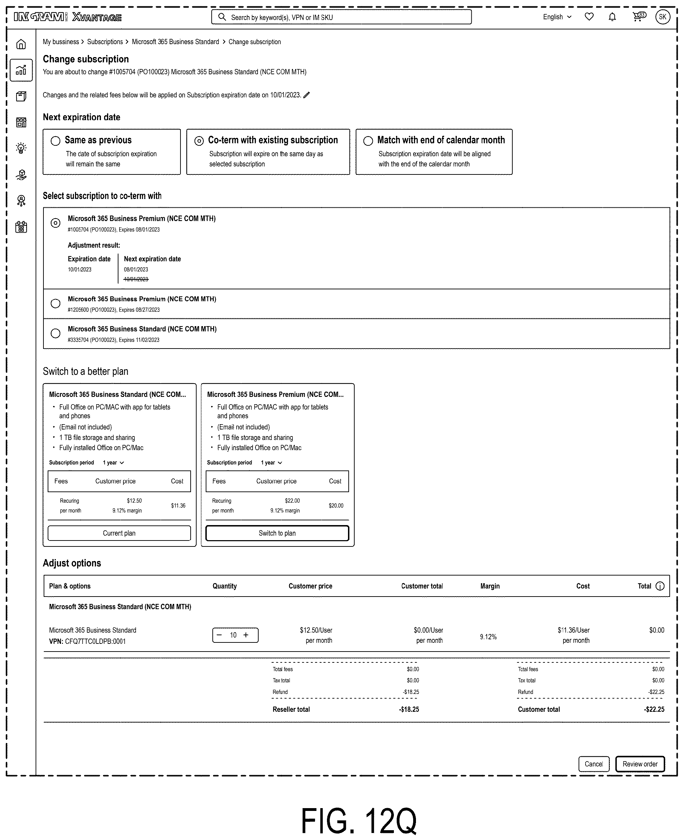

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing users with a comprehensive and user-friendly interface for vendor onboarding, partnership management, customer interaction, order management, subscription management, and tracking within the distribution ecosystem.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A data integration system for providing real-time insights, comprising:
a server, coupled to a processor, and configured to execute instructions that:
ingest, by an Integration Layer of a Real-Time Data Mesh module, data from multiple sources, the ingesting being defined by establishing connections with at least one of ERP systems, CRM systems, online transactions, clickstream data, and third-party APIs,
harmonize, by a Data Processing Engine of the Real-Time Data Mesh module, the ingested data, the harmonizing being defined by applying ETL processes to standardize, deduplicate, and normalize the data,
store, by a Data Lake of the Real-Time Data Mesh module, the harmonized data, the storing being defined by utilizing distributed storage technologies,
generate, by a Predictive Analytics Engine of an Advanced Analytics and Machine Learning (AAML) module, insights from the harmonized data, the generating being defined by applying machine learning algorithms,
provide, by a Single Pane of Glass User Interface (SPoG UI), visualizations of the generated insights, the providing being defined by displaying interactive dashboards and reports.

2. The system of claim 1, wherein the server is further configured to:
analyze, by a Sentiment Analysis Engine of the AAML module, customer feedback data, the analyzing being defined by applying natural language processing (NLP) techniques to determine sentiment.

3. The system of claim 2, wherein the server is further configured to:
identify, by a Topic Modeling Engine of the AAML module, key themes in the customer feedback data, the identifying being defined by applying topic modeling techniques.

4. The system of claim 3, wherein the server is further configured to:
segment, by a Customer Segmentation Engine of the AAML module, customers based on their interaction data, the segmenting being defined by clustering algorithms.

5. The system of claim 4, wherein the server is further configured to:
generate, by a Recommendation Engine of the AAML module, personalized marketing messages, the generating being defined by applying collaborative filtering techniques.

6. The system of claim 5, wherein the server is further configured to:
detect, by an Anomaly Detection Engine of the AAML module, irregular patterns in inventory data, the detecting being defined by applying anomaly detection algorithms.

7. The system of claim 6, wherein the server is further configured to:
update, by a Continuous Learning Engine of the AAML module, the machine learning models in real-time, the updating being defined by applying online learning algorithms.

8. A computer-implemented method, comprising:
ingesting, by an Integration Layer of a Real-Time Data Mesh module, data from multiple sources, the ingesting being defined by establishing connections with at least one of ERP systems, CRM systems, online transactions, clickstream data, and third-party APIs,
harmonizing, by a Data Processing Engine of the Real-Time Data Mesh module, the ingested data, the harmonizing being defined by applying ETL processes to standardize, deduplicate, and normalize the data,
storing, by a Data Lake of the Real-Time Data Mesh module, the harmonized data, the storing being defined by utilizing distributed storage technologies,
generating, by a Predictive Analytics Engine of an Advanced Analytics and Machine Learning (AAML) module, insights from the harmonized data, the generating being defined by applying machine learning algorithms,
providing, by a Single Pane of Glass User Interface (SPoG UI), visualizations of the generated insights, the providing being defined by displaying interactive dashboards and reports.

9. The method of claim 8, further comprising:
analyzing, by a Sentiment Analysis Engine of the AAML module, customer feedback data, the analyzing being defined by applying natural language processing (NLP) techniques to determine sentiment.

10. The method of claim 9, further comprising:
identifying, by a Topic Modeling Engine of the AAML module, key themes in the customer feedback data, the identifying being defined by applying topic modeling techniques.

11. The method of claim 10, further comprising:
segmenting, by a Customer Segmentation Engine of the AAML module, customers based on their interaction data, the segmenting being defined by clustering algorithms.

12. The method of claim 11, further comprising:
generating, by a Recommendation Engine of the AAML module, personalized marketing messages, the generating being defined by applying collaborative filtering techniques.

13. The method of claim 12, further comprising:
detecting, by an Anomaly Detection Engine of the AAML module, irregular patterns in inventory data, the detecting being defined by applying anomaly detection algorithms.

14. The method of claim 13, further comprising:
updating, by a Continuous Learning Engine of the AAML module, the machine learning models in real-time, the updating being defined by applying online learning algorithms.

15. A non-transitory tangible computer-readable device having instructions stored thereon that, when executed by a computing device, cause the computing device to perform operations comprising:
ingesting, by an Integration Layer of a Real-Time Data Mesh module, data from multiple sources, the ingesting being defined by establishing connections with at least one of ERP systems, CRM systems, online transactions, clickstream data, and third-party APIs,
harmonizing, by a Data Processing Engine of the Real-Time Data Mesh module, the ingested data, the harmonizing being defined by applying ETL processes to standardize, deduplicate, and normalize the data,
storing, by a Data Lake of the Real-Time Data Mesh module, the harmonized data, the storing being defined by utilizing distributed storage technologies,
generating, by a Predictive Analytics Engine of an Advanced Analytics and Machine Learning (AAML) module, insights from the harmonized data, the generating being defined by applying machine learning algorithms,
providing, by a Single Pane of Glass User Interface (SPoG UI), visualizations of the generated insights, the providing being defined by displaying interactive dashboards and reports.

16. The device of claim 15, wherein the instructions further cause the computing device to perform operations comprising:
analyzing, by a Sentiment Analysis Engine of the AAML module, customer feedback data, the analyzing being defined by applying natural language processing (NLP) techniques to determine sentiment.

17. The device of claim 16, wherein the instructions further cause the computing device to perform operations comprising:
identifying, by a Topic Modeling Engine of the AAML module, key themes in the customer feedback data, the identifying being defined by applying topic modeling techniques.

18. The device of claim 17, wherein the instructions further cause the computing device to perform operations comprising:
segmenting, by a Customer Segmentation Engine of the AAML module, customers based on their interaction data, the segmenting being defined by clustering algorithms.

19. The device of claim 18, wherein the instructions further cause the computing device to perform operations comprising:
generating, by a Recommendation Engine of the AAML module, personalized marketing messages, the generating being defined by applying collaborative filtering techniques.

20. The device of claim 19, wherein the instructions further cause the computing device to perform operations comprising:
detecting, by an Anomaly Detection Engine of the AAML module, irregular patterns in inventory data, the detecting being defined by applying anomaly detection algorithms.
